(19) Europäisches Patentamt / European Patent Office / Office européen des brevets

(11) **EP 1 294 454 B1**

(12) **EUROPEAN PATENT SPECIFICATION**

(45) Date of publication and mention
of the grant of the patent:
**27.07.2011 Bulletin 2011/30**

(51) Int Cl.:
***A63B 57/00*** (2006.01)   ***G06F 1/16*** (2006.01)
***G01S 5/14*** (2006.01)

(21) Application number: **01944559.2**

(22) Date of filing: **15.06.2001**

(86) International application number:
**PCT/US2001/019284**

(87) International publication number:
**WO 2001/097926 (27.12.2001 Gazette 2001/52)**

(54) **PERSONNEL GOLFING ASSISTANT**

PERSÖNLICHER GOLFASSISTENT

DISPOSITIF PERSONNEL DE POSITIONNEMENT AIDANT A LA PRATIQUE DU GOLF

(84) Designated Contracting States:
**AT BE CH CY DE DK ES FI FR GB GR IE IT LI LU MC NL PT SE TR**

(30) Priority: **16.06.2000 US 212036 P**
**07.08.2000 US 223152 P**

(43) Date of publication of application:
**26.03.2003 Bulletin 2003/13**

(73) Proprietor: **Evaltec**
**Ridgeland, MS 39157 (US)**

(72) Inventors:
• **MEADOWS, James, W.**
**Madison, MS 39110 (US)**
• **ROOT, Richard, L.**
**Jackson, MS 39206 (US)**
• **NASH, Dallas, L., III**
**Ridgeland, MS 39157 (US)**
• **EDMONSON, Richard, C.**
**Madison, MS 39110 (US)**

(74) Representative: **Samuels, Adrian James**
**Dehns**
**St Bride's House**
**10 Salisbury Square**
**London**
**EC4Y 8JD (GB)**

(56) References cited:
**EP-A- 1 034 818        WO-A-96/21161**
**US-A- 5 438 518        US-A- 5 627 547**
**US-A- 5 685 786        US-A- 5 751 244**
**US-A- 5 810 680        US-A- 5 810 680**
**US-A- 5 828 336        US-A- 5 903 654**

**Description**

**BACKGROUND OF THE INVENTION**

**1. FIELD OF THE INVENTION**

This invention relates generally to navigation, survey and analysis systems, and more particularly to a golfing assistant that allows a golfer to easily survey and/or electronically input target and avoidance locations of a golf course, record those locations, then use that object data to determine the relative distance and relative elevation to those objects using a handheld personal digital assistant (PDA) and global positioning system (GPS) device.

**2. BACKGROUND**

Since the inception of the global positioning system (GPS) in the 1980's many useful military and civilian applications have been developed to utilize its positioning capabilities. Since GPS is primarily a military system, the civilian signals have been previously degraded in a mode called Selective Availability (SA). Typically, positions could be determined to a radius of 100 meters. For many applications that was sufficient and acceptable. For other applications, greater accuracy was required and numerous methods were developed to diminish the effect of SA and increase the accuracy level of the civilian signal. Many of these methods required post processing of the signal data and thus could not be used in real time applications. Other methods required the use of Differential GPS (DGPS) equipment to increase the accuracy of the signal in real time. These systems typically produced an accuracy of 1 to 5 meters but required additional receivers, communications links and antennas. They were portable systems but not easily handheld.

In May of 2000 the Department of Defense authorized the general cessation of SA on the civilian signal. This has diminished intentional errors to the signal and has increased the accuracy of commercial GPS receivers to generally 1 to 10 meters. This range of accuracy greatly enhanced existing applications and will create many opportunities for new applications.

During the period when SA was turned on, the error introduce by the government was the major error in the GPS civilian system which required various techniques such as DGPS to sufficiently correct distances for use on a golf course. With SA turned off, DGPS is no longer necessary for sufficiently accurate distance calculations over short periods of time where environmental conditions remain essentially unchanged for a GPS system tuned for the motion dynamics of a golfer US 5,751,294 discloses methods and apparatus to-determining occurents positions using a GPS system in which a GPS receiver is positioned at a reclame location with a know position, the apparent GPS position is then compared with the known position to determine an error correction. However, over longer periods of time, the changes in the ionosphere and troposphere now make up the major error in the GPS civilian system when determining locations and distances on a golf course. By applying the processes of the present invention, and on a golf course. BY applying the processes of the present these changes can be filtered out and the GPS tunable parameters can be set by the golfer for a specific course to produce accuracies necessary for the golf course environment. WO 69/2116 disclosed a method and system for determining location information on a golf course, including a computing device and a GPS device connected to the computing device.

The present invention provides a personal, independent handheld device for the mobile golfer. Some prior systems use a base station installed on the course with radios to transmit correction data. This invention does not require any centralized equipment or radios to be installed at the golf course. Some systems transmitters to be installed on the pin on the green. This invention does not require any transmitters to be installed at the course. Some systems require survey zones to be pre-defined and course images generated by professionals and then provided to the golfer, Although this invention can use surveys developed by others, the owner of the device can perform his own personal surveys using a. simple target-based user interface with specialized objects and descriptors tailored for golf. Some systems require error corrections to be obtained and applied on a per satellite basis. This Invention can adjust for differences in environmental conditions from the time the original survey was performed and the current playing conditions for a set of targets grouped as a networked data set without having to apply corrections to individual satellites. If DGPS is used to apply corrections to individual satellites, the processes described by this invention can be applies to further improve system key. Many systems require specific cart mounted equipment to determine the ball's approximate position and compute distance to targets. This invention allows the mobile golfer to walk up to the ball and hold the device immediately above the ball location to determine the balls position and the distance to various targets. Cart-based systems are typically dedicated to a specific course and shared by many golfers. This invention can be used on a variety of courses and can be adjusted for the personal _ mobile golfer dynamics of each course using tumble OPS parameters. '

## SUMMARY OF THE INVENTION

From a first aspect the present invention provides an apparatus for measuring and displaying distances between a golfer and a desired location on a golf course as claimed in claim 1. From a second aspect the invention provides an apparatus for measuring and distances between a golfer and a desired location on a golf course as claimed in claim 9. From a third aspect the invention provides a method of obtaining and processing location values for a desired point on a golf course as claimed in claim 17.

An object of the present invention is to provide a personal golfing assistant that allows a golfer to personally survey his own courses without relying on any local equipment other than a handheld device.

A further object of the present invention is to provide a personal golfing assistant that accurately measures distances between a user and an object on a golf course.

## BRIEF DESCRIPTION OF THE DRAWINGS

FrG. 1 shows a flowchart of an embodiment of the main program of one embodiment of the present invention.
FIG. 2 shows a flowchart of a process user input module of one embodiment of the present invention.
FIG. 3 shows a flowchart of a process menu event module of one embodiment of the present invention.
FIG. 4 shows a flowchart of a process pen down event module of one embodiment of the present invention.
FIG. 5 shows a flowchart of a process virtual button event module of one embodiment of the present invention.
FIG. 6 shows a flowchart of a process hard button event module of one embodiment of the present invention.
FIG. 7 shows a flowchart of a process state action module of one embodiment of the present invention.
FIG. 8 shows a flowchart of a compute distance module of one embodiment of the present invention.
FIG. 9 shows a flowchart of an analyze conditions module of one embodiment of the present invention.
FIG. 10 shows a flowchart of a scoring and statistics module of one embodiment of the present invention.

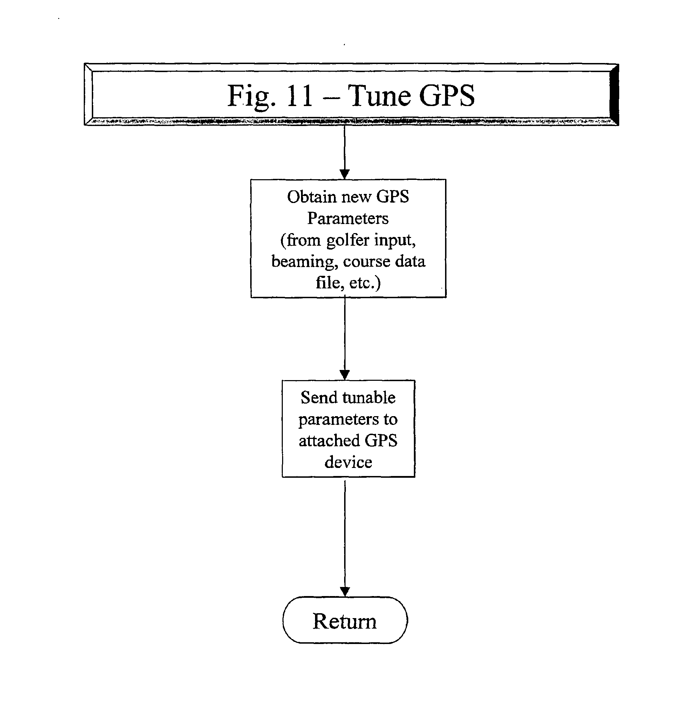

FIG. 11 shows a flowchart of a tune GPS module for one embodiment of the present invention.
FIG. 12 shows a flowchart of a data exchange module for one embodiment of the present invention.
FIG. 13 shows a graph of control points and networked points created without using DGPS
FIG. 14 shows a graph of control points and networked points created using DGPS.
FIG. 15 shows a graph of control points and non-networked points created using DGPS.
FIG. 16 shows a graph of control points and networked points created using DGPS illustrating properly tuned event recovery.
FIG. 17 shows a graph of control points and networked points created using DGPS illustrating improperly tuned event recovery.
FIG. 18 shows a main screen of a PDA user interface of one embodiment of - the present invention.
FIG. 19 shows an adding targets screen of a PDA user interface of one embodiment of the present invention.
FIG. 20 shows an adding target descriptions screen of a PDA user interface of one embodiment of the present invention.
FIG. 21 shows a recording target location screen of a PDA user interface of one embodiment of the present invention.
FIG. 22 shows a marking current ball location screen of a PDA user interface of one embodiment of the present invention.
FIG. 23 shows a recording club used screen of a PDA user interface of one embodiment of the present invention.
FIG. 24 shows a green targets screen of a PDA user interface of one embodiment of the present invention.

## DETAINED DESCRIPTION OF THE INVENTION

The preferred personal golfing assistant of the present invention is a golfer-specific integrated system of software running on a PDA integrated to a GPS receiver with tunable parameters for individual mobile golfer dynamics that enables the user to engage in a process of easily surveying and/or electronically capturing geophysical data pertinent to the game of golf such as the location of the center of the green, zones on the green, bunkers, water, trees, hazards, etc. Where appropriate, target outlines may be captured to enable the golfer to later view the distance to the front/back or any other point of interest along the outline based on their current ball position and viewpoint.

The preferred device allows the golfer to use the same handheld PDA/GPS unit in the course of play to mark the ball location and/or determine the distance to various target and avoidance objects after adjusting for differences in environmental conditions from the time an original survey was performed and the current conditions. It takes into account the motion dynamics specific to an individual golfer on a specific course. A golfer may, if so desired, easily survey additional points during the normal course of play in real time and then immediately use that data. Furthermore, a golfer can elect to record the ball locations at each shot and select the club used as well as other pertinent data such as fairway position, ball trajectory (straight, hook, slice, etc.), lie position, sand saves, green in regulation, number of putts, etc. Software analyzes ball location, distance, club and other information in order to generate useful statistics that could improve and/or enhance the golfers game. Target/avoidance objects, distances and/or statistics can selectively be displayed in real time as text on the PDA screen and/or graphically on an electronic course layout map of each hole and/or group of holes contained in memory on the PDA. Distance information may be displayed in yards or meters or other units as require. Other peripheral functions may be displayed as well, such as timer functions, custom course slope functions, scoring functions, golf handicap functions, etc. Club suggestions may be displayed based on previously captured statistical data and current distance to target area.

To facilitate the ability of a golfer to easily adjust for changes in environmental conditions, several special non-target reference points on each hole can also be recorded during a survey process. These reference points combined with the target points enable the PDA to also be used by itself in a simulation mode as an electronic version of a yardage book where the use of GPS is restricted either due to play rules or other circumstances. When GPS use is restricted, the golfer can use the PDA by itself as an electronic yardage book by operating in a simulation mode and making use of special non-target reference points or targets. By going to a reference point or target the golfer can simulate that the golfer is at that point in order to view distances to all targets from that point and then make adjustments for actual ball location from that point in much the same way as sprinkler heads and other permanent markers are currently used to estimate distance to center of green during play.

The golfer can also load course object data previously surveyed by the golfer or others and adjust the distance processing to correct for differences between current environmental conditions and the environmental conditions when the course was originally surveyed. This process combined with real time tunable GPS parameters that can be adjusted for the dynamics of an individual mobile golfer on a specific course enables relative distances to be computed with sufficient accuracy for golf without requiring the use of DGPS equipment or any equipment mounted on a golf cart or infrastructure on the golf course. As part of the process of using real time tunable GPS parameters and geo-referenced object data adjusted for changes in environmental conditions, a golfer will be able to also record the distances, locations and type of each golf shot, associate that with the club used and then generate useful visualization, real time suggestions based on prior play, statistics and scoring for each round of golf. The PDA can also be used by itself in a simulation mode as an electronic version of a yardage book.

Modes

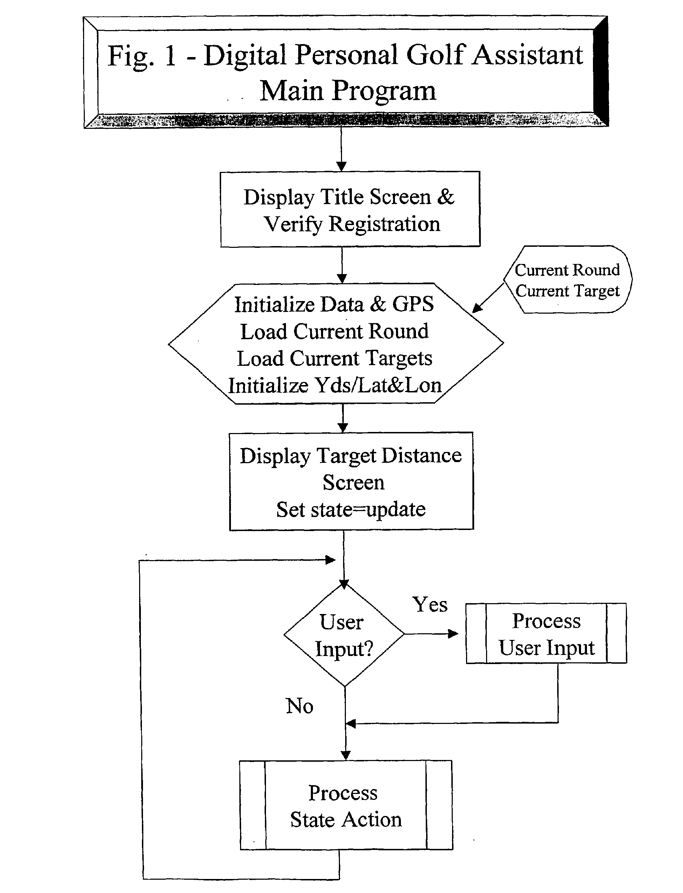

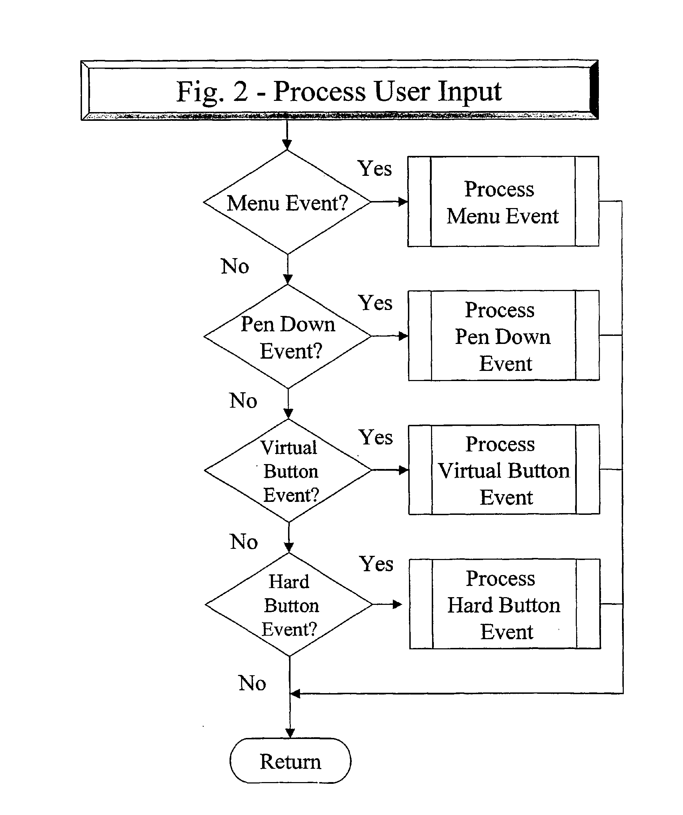

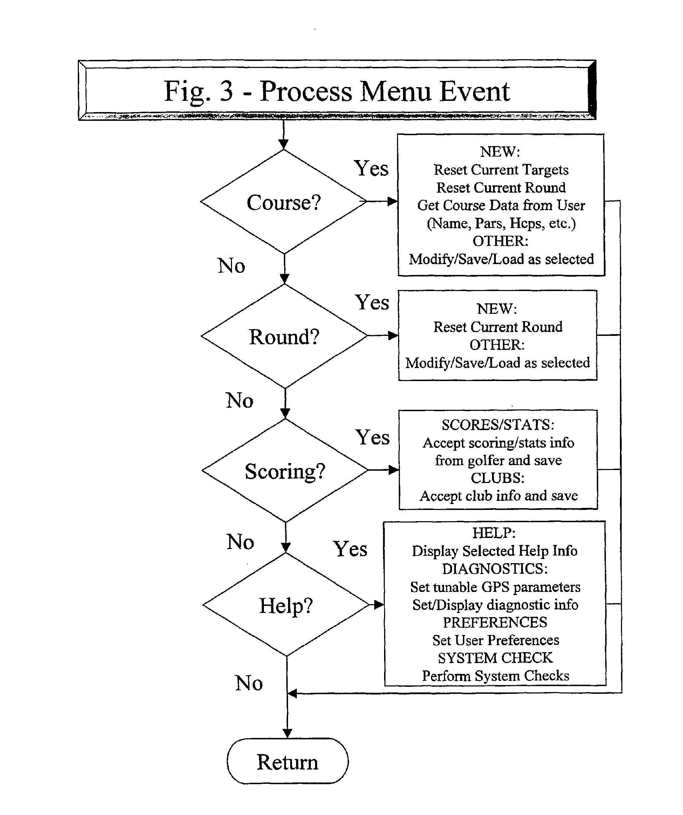

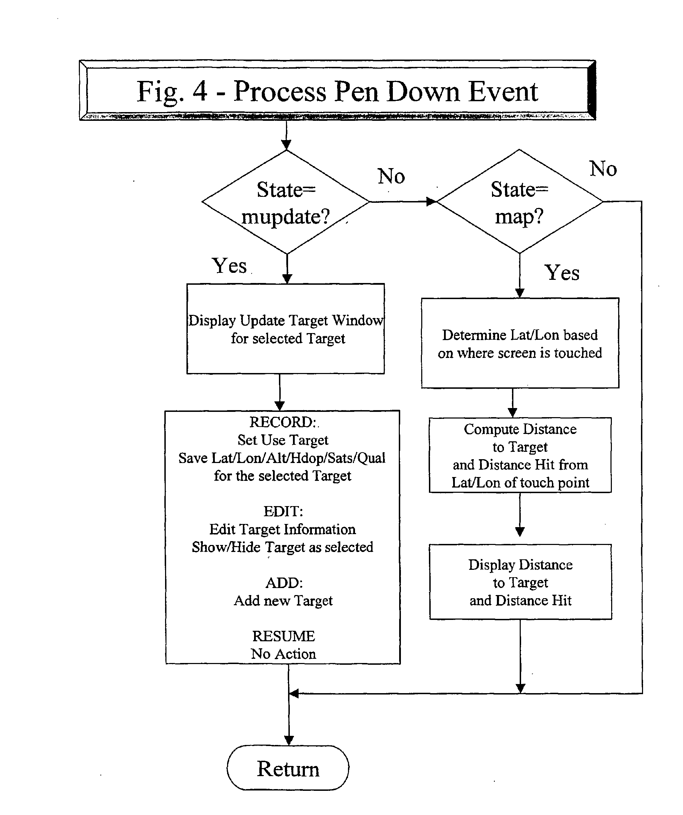

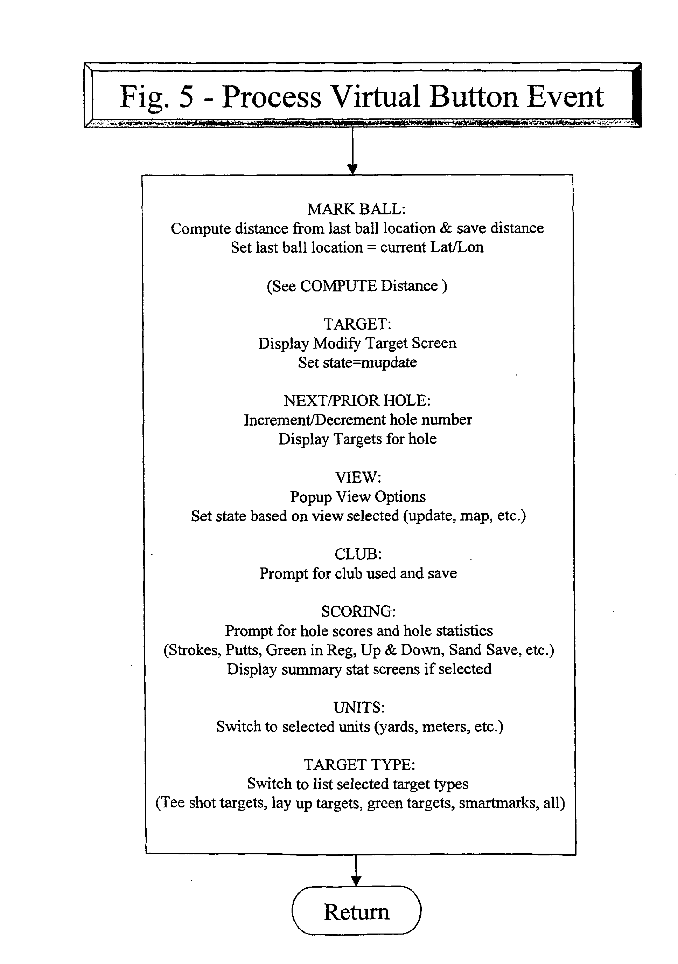

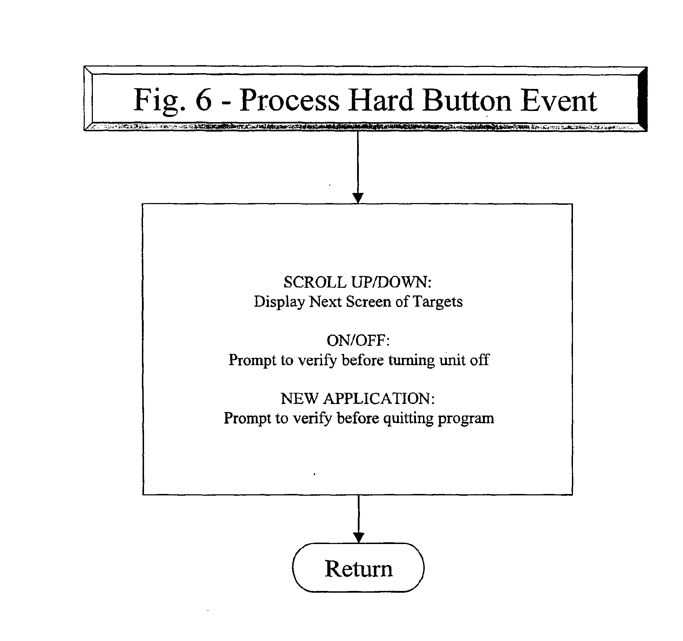

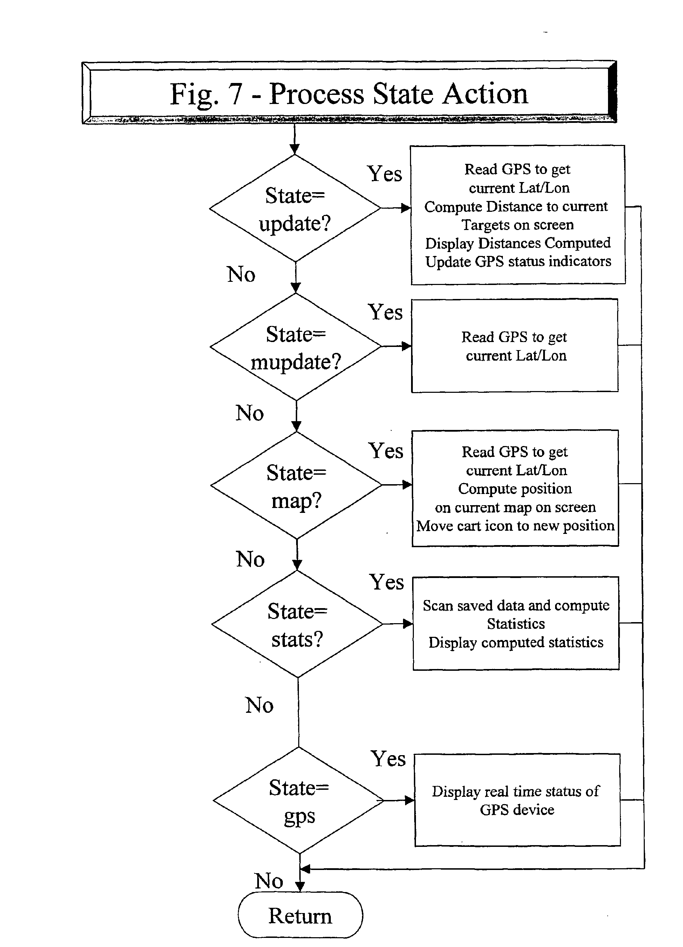

The preferred personal golfing assistant system is comprised of software running on a handheld computing device such as a PDA that is attached to a GPS receiver. Examples of PDA's that could be used include those manufactured by Palm, Handspring and others. Alternatively, a palmtop computer or other small processing device with a display could be used. The GPS receiver and the computing device are contained in a single, handheld housing. It is an event driven system as illustrated by the flowcharts in Figs 1-7. The user has the option to select the mode for loading a previously surveyed course and play a round of golf, or select the setup mode to engage in a process of easily surveying and/or electronically capturing geophysical data points pertinent to the game of golf such as the location of the center of the green, zones on the green, bunkers, water, trees, hazards, etc. While in play mode the golfer can perform selected survey functions to add new data points to the current course survey. A simulation mode allows the golfer to use the PDA without the GPS attached for conditions where GPS use is restricted or for strategy planning purposes while away from the course.

**Survey and Data Capture**

Survey and data capture functions are implemented by means of several processes. The first process allows the user to survey the target/avoidance objects prior to playing a round of golf. A user interface screen presents the user with a hierarchical list of objects from which the user can choose and mark the geo-referenced location by simply pressing a virtual "record Target" button on the PDA display touch screen. The GPS data would then be automatically recorded and associated with the object designation. A series of objects (e.g. targets for a single hole) surveyed within a short period of time can be grouped as a networked data set. A networked data set is a group of points that retain their distance relationships even as major environmental changes occur. Absolute position accuracy is not as essential while surveying as long as the relative position of objects within a networked data set is accurate. These data points would then be referenced during subsequent rounds of golf in order to provide the basis for analysis and statistics.

The second process allows the user to survey the location of the target/avoidance objects during the normal course of play as the golfer arrives at each ball location or area of interest. The user enters the data via the menu presented on the PDA display touch screen. When the virtual "Record Target" button is pressed on the display touch screen the GPS location information is automatically recorded and associated with the object designation.

A third process allows the user to dynamically update or add survey information during the normal course of play even after location data has previously been entered. The golfer merely selects the item to add or update and then touches the virtual "Record Target" button to automatically record the position data with the desired point or object. That data is then immediately available for use by the golfer. By making appropriate use of reference points prior to adding targets, the new target locations can be adjusted to match the environmental conditions of the networked data set when the course was previously surveyed in order to preserve the relative distances of all targets in the networked data set to one another.

### Position Simulation

When GPS use is restricted, a golfer can use a simulation mode to determine distances to course targets and hazards. By going to one of the special non-target reference points or any of the targets on a hole, the golfer can simulate that the golfer is at that point in order to view distances to all targets from that point. The golfer can then make adjustments for the actual ball location from that point in much the same way as sprinkler heads and other permanent markers are currently used to estimate distance to center of green during play.

In an alternative embodiment of the present invention geo-referenced layout maps of the golf course can be displayed on the PDA screen to enable the golfer to approximate and visually locate on the PDA screen new survey locations of target/avoidance objects and points as well as approximate and visually locate distances to those objects and points from an estimated marked position if no GPS signal was available. The golfer would have all of the statistical and scoring functionality of the software albeit deductive reckoning would approximate the distances.

### Distance, Scoring and Statistics during Play

In a further aspect of one embodiment of the present invention, software allows the golfer to immediately and in real time use the same handheld PDA/GPS unit in the course of play to dynamically display in real-time on the PDA screen the distance from the golfer holding the PDA/GPS device to the various target/avoidance objects that the golfer previously surveyed and/or downloaded via PC, landline, or wireless link into the system.

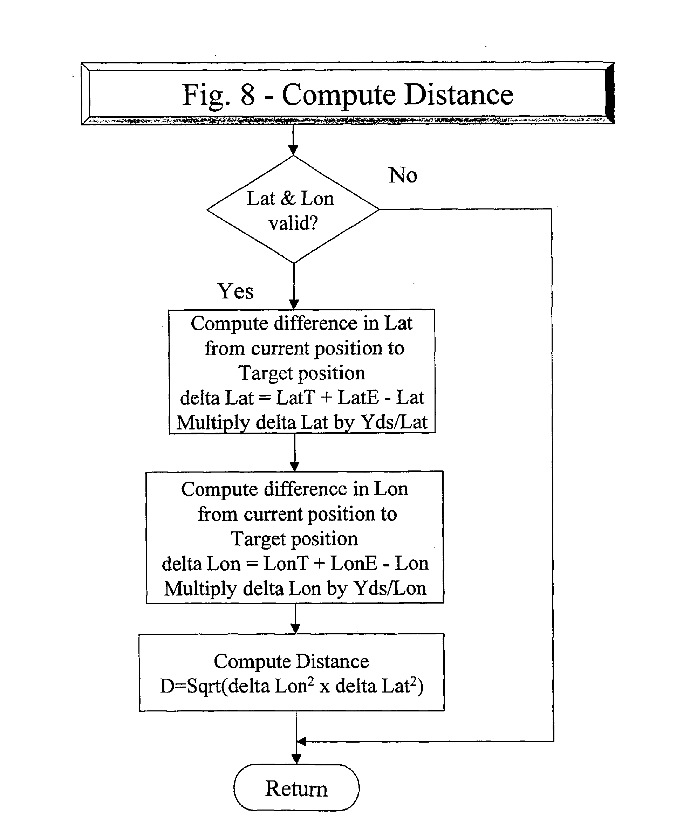

During actual play of a round of golf the golfer may mark the ball location by pressing a virtual "Mark Ball" button on the PDA screen and then, as shown in FIG. 8, automatically determine the distance to various target and avoidance objects, and/or relative elevation to the target/avoidance objects as well as the distance the ball was hit. Furthermore, the golfer can elect to record the ball locations at each shot and select club used as well as other pertinent data such as fairway position, ball trajectory (straight, hook, slice, etc.), sand saves, green in regulation, number of putts, etc. This allows the golfer to save club distance and other characteristics of the shot for immediate review on the PDA or later analysis on the PDA or other computing devices. This analysis could include, but is not limited to, computing the average distance hit for each club based on data from single or multiple rounds of play. Based on average distances for each club and the current distance to a target the system could make club recommendations for a particular shot during play.

In the subroutine shown in FIG. 8, yards per latitude and yards per longitude for the golfer's current location on the earth are generated when a new screen is displayed. This reduces the complexity and time required for the real time computation and update of distances to all targets being displayed. An alternative method is to use the great circle formula to compute the distance between all latitude and longitude points. Elevation differences may also be calculated and displayed.

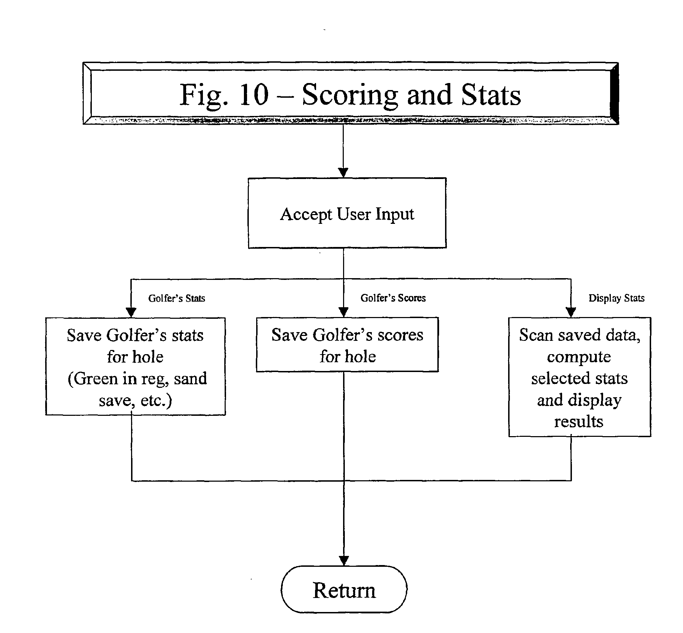

The Scoring and Statistics Module shown in FIG. 10 analyzes scores, ball location, distance, club and other information in order to generate useful statistics that could improve and/or enhance a golfer's game. The target/avoidance objects and/or statistics can selectively be displayed as text on the PDA screen and/or graphically on geo-referenced and object oriented course layout maps of each hole and/or groups of holes contained in memory on the PDA. The software can also process cumulative course distances to generate daily course slope data for use by the golfer. Other data may be generated and displayed as well such as timer functions, golf handicap functions, etc.

### eFilter adjustments for Environmental Conditions

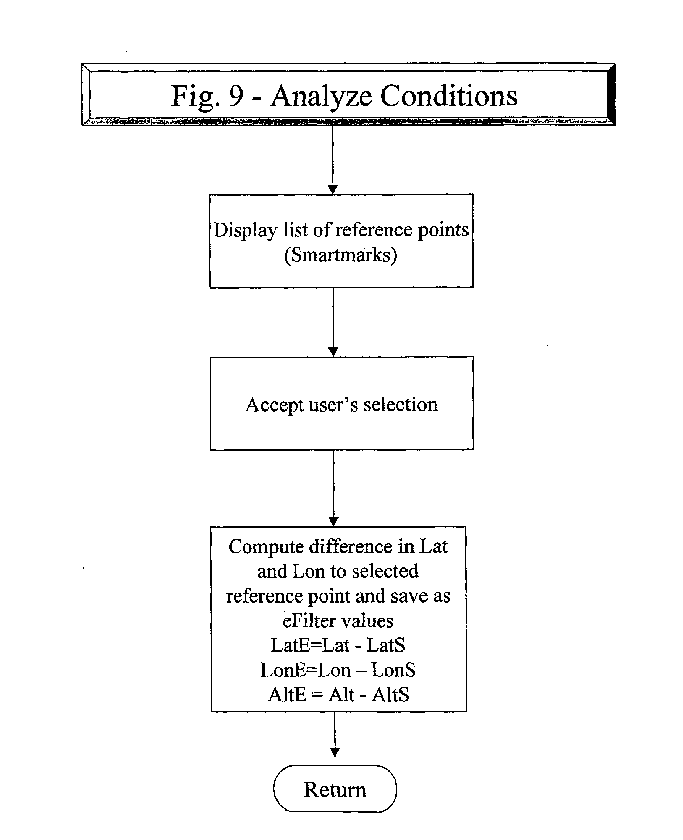

By having one or more reference points included in a pre-defined survey of known points of a golf course, a golfer can adjust for the current environmental conditions for a period of time in order to correctly determine distances to the pre-defined points of interest without requiring the use of DGPS equipment or any equipment mounted on a golf cart or infrastructure on the golf course. Unlike DGPS and other techniques that apply corrections on a per satellite basis, the eFilter corrections of this invention are applied to a networked data set of points. DGPS and other corrective techniques can be used in conjunction with the techniques of this invention for additional accuracy, but are not required. Use of the eFilter will make DGPS-based computations even more accurate. FIGs. 8 and 9 show the flowcharts for the distance computation and eFilter adjustment processes.

Before starting play, a golfer goes to the first reference point and taps a button on his PDA to instruct the software to correct for current environmental conditions. In the simplest form, this is accomplished by comparing the current computed latitude/longitude (Lat/Lon) to the previously surveyed Lat/Lon (LatS/LonS) for the reference point and computing the difference in Lat and difference in Lon. These differences become the basis of correction values referred to herein as Latitude/Longitude eFilter correction values (LatE/LonE). As the golfer plays the course, if the eFilter is turned on, all target Lat/Lons (LatT/LonT) are adjusted by the eFilter correction values (LatE/LonE) as illustrated below:

When the button is pressed at the first reference point:

$$LatE = Lat - LatS$$

$$LonE = Lon - LonS$$

The adjusted Lat/Lon (LatTA/LonTA) of a subsequent target position is then computed as follows when the eFilter is on:

$$LatTA = LatT + LatE$$

$$LonTA = LonT + LonE$$

Distance from the current position (Lat/Lon) to a target is then computed using LatTA/LonTA rather than LatT/LonT.

Where

    LatS = Lat of reference point in pre-defined survey
    LonS = Lon of reference point in pre-defined survey
    LatE = eFilter Lat correction value
    LonE = eFilter Lon correction value
    Lat = current GPS Lat reading
    Lon = current GFS Lon reading
    LatT = Lat of target point in a pre-defined survey
    LonT = Lon of target point in a pre-defmed survey
    LatTA = Adjusted Lat of target point
    LonTA= Adjusted Lon of target point

An alternative method would be to compute LatE as LatS-Lat and apply the adjustment to Lat rather than LatT (and the same for LonS).

As long as the current environmental conditions remain fairly consistent, distances will now be corrected to 1-3 meter accuracy. If the golfer notices that the computed distances appear incorrect, he can go to the next available pre-surveyed reference point and repeat the above process to correct for the new environmental conditions. Reference points can be pre-surveyed in the tee area of each hole and other specific points along the hole to allow the golfer to establish new eFilter correction values at each hole. These specific reference points can be grouped as non-target points (SmartMarks) and displayed in a list for each hole to enable the golfer to easily find the nearest reference point where he can adjust for new environmental and other conditions that introduce errors in the position solution.

If a golfer does not have a pre-defmed precise survey of known points on a course, he can perform his own survey as previously described with the eFilter turned OFF. As part of the survey he must select and survey a recognizable reference point for the course and, if possible, reference points in the tee area and other specific points along each hole. The objects surveyed immediately after marking a reference point become a networked data set (e.g. all recorded points for a hole). As long as the data set survey is accomplished within a period of time where environmental conditions are relatively constant, all points within the data set will have an accurate offset from the reference point. After completing the data set, the golfer can return to the reference point and verify that the distance to the reference point is within acceptable limits (e.g. 1-3 yards) while standing on the reference point to ensure the validity of the networked data set. If the distance to the reference point is greater than the acceptable limit when standing back at the reference point, the data set must be resurveyed.

When the golfer is ready to start play either later that day or on some other day, the golfer goes to the first reference point and taps a button on his PDA to instruct the software to correct for current environmental conditions. The software will compare the current GPS Lat/Lon to the surveyed Lat/Lon for the reference point and compute the difference in Lat and difference in Lon. These differences become the basis of the current Latitude/Longitude eFilter correction values (LatE/LonE). As the golfer plays the course, if the eFilter is turned on, all target Lat/Lons are adjusted by the eFilter correction values. This process effectively applies the difference in environmental conditions from the time the points were originally surveyed and the current conditions. These adjustments are primarily valid for the data set associated with the reference point for that networked data set. However, if the original survey of the entire course is performed within a short enough time, the first reference point can also be considered a reference point for the entire course and the entire course treated as a networked data set. In this case the golfer needs only set the eFilter at the beginning of play instead of at each hole. At any time during play, if current conditions change to produce errors outside of acceptable limits, the golfer can then go to the next reference point for a hole and create new eFilter correction values for the current conditions which then remain valid as long as current conditions remain relatively consistent.

A golfer can also add a new target to an existing course survey if he has recently gone to a reference point and created new eFilter correction values for the current environmental conditions as follows:

$$LatE = Lat - LatS$$

$$LonE = Lon - LonS$$

If the eFilter is on when he marks new targets, the target Lat/Lon will be adjusted to match the original survey environmental conditions for the networked data set. As the golfer adds new targets to the networked data set, if the eFilter is on, the Lat/Lon for the target(s) are adjusted and saved as follows:

$$LatTM = Lat - LatE$$

$$LonTM = Lon - LonE$$

Where

LatS = Lat of reference point in prior survey
LonS = Lon of reference point in prior survey
LatE = eFilter Lat correction value
LonE = eFilter Lon correction value
Lat = current GPS Lat reading
Lon = current GPS Lon reading
LatTM = Modified Lat of target point saved in networked data set
LonTM = Modified Lon of target point saved in networked data set

The Lat/Lon saved for the target(s) are effectively modified to match the environmental conditions of the original networked data set so that it can be treated as part of that networked data set.

A golfer can add new reference points to an existing course survey if he has at least one valid reference point that was saved under similar environmental conditions as the survey points. For example, if a reference point was surveyed for the 1 st and 3rd holes but not for the 2nd hole, the golfer could go to one of the reference points and create new efilter correction values for the current environmental conditions. The golfer would then go to the 2nd hole and mark the desired reference point for that hole with eFilter on. This will modify the Lat/Lon of the new reference point when it is recorded to match the environmental conditions of the original networked data set.

Prior to adding a new reference point the golfer goes to a nearby reference point and creates a new eFilter to compute the following:

$$LatE = Lat - LatS$$

$$LonE = Lon - LonS$$

When the golfer goes to the location for a new reference point and marks it, if the eFilter is on, the Lat/Lon for the reference point is adjusted and saved as follows:

$$LatRM = Lat - LatE$$

$$LonRM = Lon - LonE$$

Where

LatS = Lat of known reference point. in prior survey
LonS = Lon of known reference point in prior survey
LatE = eFilter Lat correction value
LonE = eFilter Lon correction value
Lat = current GPS Lat reading
Lon = current GPS Lon reading
LatRM = Modified Lat of new reference point saved in networked data set
LonRM = Modified Lon of new reference point saved in networked data set

The Lat/Lon saved for the new reference point is effectively modified to match the environmental conditions of the original networked data set so that it can be treated as part of that networked data set.

This same technique can be used to later remark a reference point for a hole that perhaps was originally marked with poor position quality (e.g. the number of satellites in use dropped momentarily when the point was marked).

**eFilter2 adjustments for Projected Environmental Conditions**

In one embodiment of the present invention, software can also access a table of correction values for projected environmental conditions for a specific period of time in order to more accurately determine distances to pre-defined points of interest on a golf course. Before playing a course, the golfer loads corrections for the projected environmental conditions for the day the golfer plans to play. These corrections are in the form of Lat/Lon adjustments based on the date and time of day. With SA turned off, the major error factor will be changes in the ionosphere. Since effects of the sun on the ionosphere can be generally predicted at any given time for a specific location, a table of Lat/Lon adjustment values can be generated for that specific location for a specific day and for specific time periods during that day.

The software at any given time would look up the Lat/Lon adjustment values in the table (referred to herein as eFilter2 adjustment values) for the current date and time to adjust for the predicted environmental conditions and apply them as follows:

$$LatTA2 = LatT + LatE2$$

$$LonTA2 = LonT + LonE2$$

Distance from the current position (Lat/Lon) to a target is then computed using LatTA2/LonTA2 rather than LatT/LonT.

Where

LatE2 = eFilter2 Lat correction value from table for a specific date and time period
LonE2 = eFilter2 Lon correction value from table for a specific date and time period
Lat = current GPS Lat reading
Lon = current GPS Lon reading
LatT = Lat of target point in a pre-defined survey
LonT = Lon of target point in a pre-defined survey
LatTA2 = Adjusted Lat of target point
LonTA2 = Adjusted Lon of target point

As long as the current environmental conditions match the predicted conditions, distances will now be corrected to a higher degree of accuracy.

By using eFilter2, the original survey performed by the golfer will be recorded to a higher degree of accuracy. For example, when performing the original survey of a course, the golfer would turn on eFilter2 but not the basic eFilter (based on reference points) described earlier. With eFilter2 turned on, the recorded Lat/Lon for target(s) would be computed and saved as follows:

$$LatTM2 = Lat - LatE2$$

$$LonTM2 = Lon - LonE2$$

Where

LatTM2 = Modified Lat of target point saved in networked data set
LonTM2 = Modified Lon of target point saved in networked data set

As long as the current environmental conditions match the predicted conditions, distances will now be corrected to a higher degree of accuracy reducing the effects of changing environmental conditions after a reference point is marked.

The distances computed during play can also be made less susceptible to changing conditions in between reference points. Before playing a course, the golfer can load corrections for the projected environmental conditions for the day he plans to play. These corrections are in the form of Lat/Lon adjustments based on the date and time of day. Also, by having one or more reference points included in a pre-defined survey of known points of a golf course, the golfer can correct for the current environmental conditions for a period of time in order to correctly determine distances to the pre-defined points of interest. Before starting play, the golfer could turn on eFilter2 to constantly adjust for predicted changes in the environment. The golfer then goes to the first reference point and taps a button on his PDA to instruct the software to compute the basic eFilter for current environmental conditions. As the golfer plays the course, if both the basic eFilter and eFilter2 are turned on, all target Lat/Lons are adjusted by the correction values as illustrated below:

When button is pressed at the 1 st reference point:

$$LatE = Lat - LatS - LatE2$$

$$LonE = Lon - LonS - LonE2$$

The adjusted Lat/Lon of a target position is then computed as follows when both eFilters are on:

$$LatTA = LatT + LatE + LatE2$$

$$LonTA = LonT + LonE + LonE2$$

Distance from the current position (Lat/Lon) to a target is then computed using LatTA/LonTA rather than LatT/Lon.T, where

LatS = Lat of reference point in pre-defined survey
LonS = Lon of reference point in pre-defined survey
LatE = eFilter Lat correction value
LonE = eFilter Lon correction value
Lat = current GPS Lat reading
Lon = current GPS Lon reading
LatE2 = eFilter2 Lat correction value from table for a specific date and time period
LonE2 = eFilter2 Lon correction value from table for a specific date and time period
LatT = Lat of target point in a pre-defmed survey
LonT = Lon of target point in a pre-defmed survey
LatTA = Adjusted Lat of target point
LonTA = Adjusted Lon of target point

**Elevation Adjustments**

If altitude is recorded for each target in addition to its Lat/Lon position, the 3D distance from the golfer's current position to any target can be computed to include eFilter adjusted differences in elevation.

When the golfer goes to a reference point and taps a button on his PDA to instruct the software to correct for current environmental conditions, the current altitude (Alt) is also compared to the surveyed altitude (AltS) for the point and the difference in altitude computed. This difference is included with the correction values for Lat/Lon as eFilter correction values (LatE/LonE/AltE). As the golfer plays the course, if the eFilter is turned on, all target Lat/Lon/alt (LatT/ LonT/AltT) are adjusted by the eFilter correction values (LatE/LonE/AltE) as illustrated below:

When button is pressed at the first reference point, compute LatE and LonE as previously described, as well as, the following:

$$AltE = Alt - AltS$$

The adjusted Lat/Lon (LatTA/LonTA) of a subsequent target position is then computed as previously described, as well as, the adjusted Alt (AltTA) of the target as follows:

$$AltTA = AltT + AltE$$

The difference in elevation between the golfer and the target point is then compted as follows:

$$ElevDist = AltTA - Alt$$

For computing three dimensional (3D) distances for golf, the effects upon the golf trajectory due to differences in elevation should also be considered. The effective 3D distance to an uphill target is greater than the straight line 3D distance between the two points due to motion dynamics of the golf ball in flight and "more club" (typically a lower club number) is needed that a straight line 3D distance would indicate. Likewise the effective distance to a down hill target is less than the straight-line 3D distance between the two points and "less club" is needed. The effective distance from the golfer's current position (Lat/Lon/Alt) to a target can be computed using LatTA/LonTA/AltTA rather than LatT/LonT/ AltT as follows:

$$LatLonDist = Sqrt\ (\ (((LatTA - Lat)*Yds/Lat)**2) + (((LonTA - Lon)$$
$$*Yds/Lon)**2))$$

$$EffDist3D = Sqrt\ (\ (LatLonDist**2) + (((AltTA - Alt)*Yds/Mtr*EF)**2)\ )$$

l Or the two equations can be combined as follows:

$$EffDist3D = Sqrt\ (\ (((LatTA - Lat)*Yds/Lat)**2) + (((LonTA - Lon)*Yds/Lon)**2) + (((AltTA - Alt)*Yds/Mtr*EF)**2)\ )$$

Where

AltS = Altitude of reference point in pre-defined survey
AltE = eFilter altitude correction value
Alt = current GPS altitude reading
AltT = altitude of target point in a pre-defined survey
AltTA = adjusted altitude of target point
Yds/Lat = Yards per latitude for that region of the earth
Yds/Lon = Yards per longitude for that region of the earth
Yds/Mtr = Yards per Meter (assuming the GPS reports altitude in meters)
EF = Elevation Factor (>1 for uphill targets, <1 for downhill targets) LatLonDist = 2D distance computed using Lat/Lon data
EffDist3D = Effective 3D distance computed using Lat/Lon and Altitude data

The value for EF can be determined from a simple trajectory model that produces values greater than 1 for uphill targets and less than 1 for down hill targets. A value of EF=1 produces the straight line 3D distance. More involved models can take into account the air density based on the current altitude. Other sensors can be added to the PDA/GPS combination such as humidity and temperature to include in the trajectory model that produces the value for EF. If available, wind speed and direction could also be factored in.

When a golfer adds new targets to a networked data set with the eFilter on, the altitude for the target(s) are adjusted and saved as follows:

$$AltTM = Alt - AltE$$

Where

AltE = eFilter altitude correction value
Alt = current GPS altitude reading
AltTM = Modified altitude of target point saved in networked data- set

Similarly, when adding a new reference point with the eFilter on, the altitude for the reference point is adjusted and saved as follows:

$$AltRM = Alt - AltE$$

Where

AltE = eFilter altitude correction value
Alt = current GPS altitude reading
AltRM = Modified altitude of new reference point saved in networked data set

**Target Outlines**

Targets have been primarily described as single point targets, but in fact can also be target outlines consisting of a series of Lat/Lon/Alt points. The target outline could be the outline of the green, a bunker, a water hazard, etc. The distance from the golfer to any point on the target outline can be computed in the same manner as already described when computing the distance from the golfer to a single target point. The eFilter adjustments can be applied to all points along the outline to correct for differences in environmental conditions in the same manner as previously described for a single target point. Distances to significant points along the outline (e.g. front/back as viewed from the golfer's current position) that have been adjusted for differences in environmental conditions can be displayed on a graphics screen displaying the outline, or to any point along or within the outline that the golfer indicates (e.g. by touching a point along the outline).

**Mobile Golfer Dynamics Toolset**

In order to provide optimal performance on a golf course, the motion dynamics of a mobile golfer must be considered. Since the PDA is a hand held device, the attached GPS can experience moderate speeds while the golfer is in a golf cart, low speeds while the golfer is walking, and many pauses while the golfer is waiting to hit the ball. This is notably different motion dynamics from a GPS used for other applications such as in a vehicle traveling down the highway. While most of the time there will be a clear view of the sky during normal play, some tees boxes may have close-by foliage, balls are hit out of the fairway and some cart paths go under covered areas. GPS signals can bounce off nearby objects resulting in position errors due to effects of multipath. It is important to tune the operation of the GPS device to reduce the impact of these short-term events and at the same time quickly recover from such events.

A Mobile Golfer Dynamics Toolset (MGDT) that can allow the capture and analysis of GPS output data under varying conditions in one embodiment of the present invention tailors the GPS device to the motion dynamics of a mobile golfer. The MGDT implemented to support the development of one embodiment of the personal golfing assistant of the present invention is capable of capturing essential GPS data during both regular play and during the survey process with and without the eFilter adjustments previously described. This toolset is also able to compare captured data to precisely surveyed known points of reference and produce statistical summaries as well as visual graphical plots of the results. The motion dynamics of the handheld GPS, as well as the effects of using different tunable parameters, can be viewed.

The Mobile Golfer Dynamics Toolset (MGDT) of one embodiment of the present invention is comprised of several components:

1) A software module that runs on a PDA that sets the GPS tunable paramaters and captures GPS output data under varying conditions that replicate the motion dynamics of a mobile golfer. GPS data can also be captured during both regular play and during a survey process with and without the eFilter adjustments previously described. This is accomplished by tapping a "Start" button on the user interface. This initializes communications with the GPS device, assigns a reference tag to the data and continuously captures all GPS data including, but not limited to, latitude, longitude, altitude, number of satellites, and HDOP (Horizontal Dilution of Precision). The data is stored in memory on the PDA for later analysis using the analysis module described below. The data capture is stopped by tapping an "End" button on the user interface. Using this process, data may be captured for analysis in the environment the GPS device will be used.

2) A software module that loads the captured data, translates and formats the data for use in the analysis software described below. This is accomplished by reading the reference tag associated with the data and the captured GPS data saved on the PDA. In one embodiment, latitude and longitude data is translated from the GPS output into decimal degree format in order to facilitate plotting of the data. The algorithm for this translation is : (+/-) ddd + (mm.mmm/ 60), where d is Degrees of latitude and longitude and m is decimal minutes of latitude and longitude. The leading (+/-) refers to latitude north (+) or south (-) and longitude east (+) or west (-). The data is then formatted by separating the data sets with commas (comma separated values - CSV) and opening and writing a new file for use by the analysis software.

3) A software analysis module that runs on a PC and compares the captured data to precisely surveyed known points of reference and produces statistical summaries, as well as visual graphical plots of the results. This is accomplished by loading the file produced by the translation software referred to above into a spreadsheet or other analysis software. The data is loaded into the spreadsheet or other analysis software and compared to known surveyed data points, i.e., Control Points. Statistical analysis of the data sets is comprised of the standard deviation calculated for the data as well as the average, minimum and maximum deltas or difference from the Control Points. Additionally, plots are generated with reference to the Control Points for visual analysis of the data to determine the relative and absolute patterns of the data sheets.. (See the FIGs. referenced below.) This is an iteritive process and is done for each set of paramaters used. As the data sets are compared, the motion dynamics of the handheld GPS can be viewed, as well as the effects of using different tunable parameters. Based on the results of this process the optimal settings for the tunable parameters of the GPS unit can be determined for each particular course, locality or even individual golfer. The motion dynamics analysis that this module provides is described below.

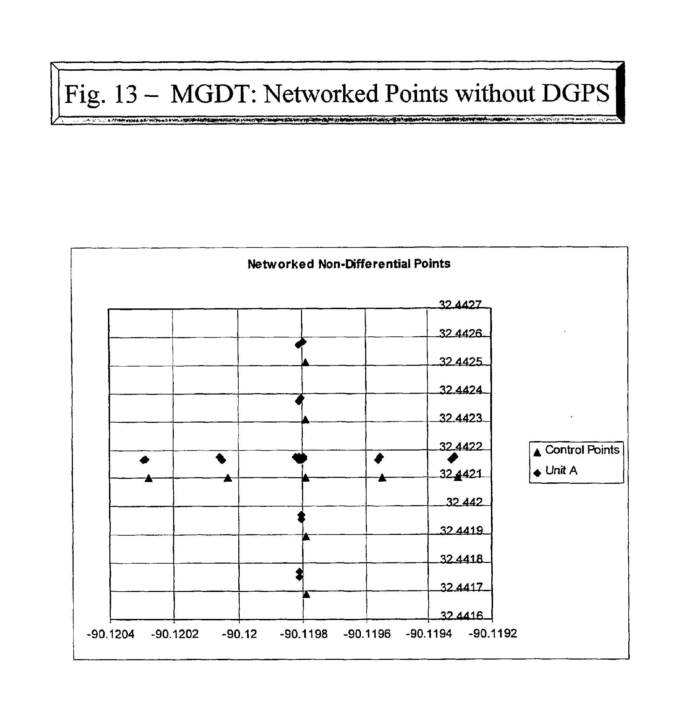

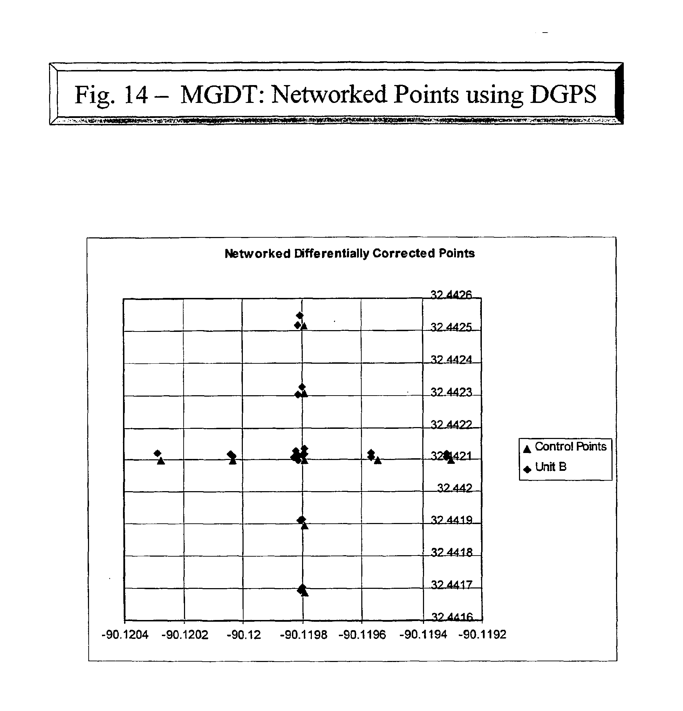

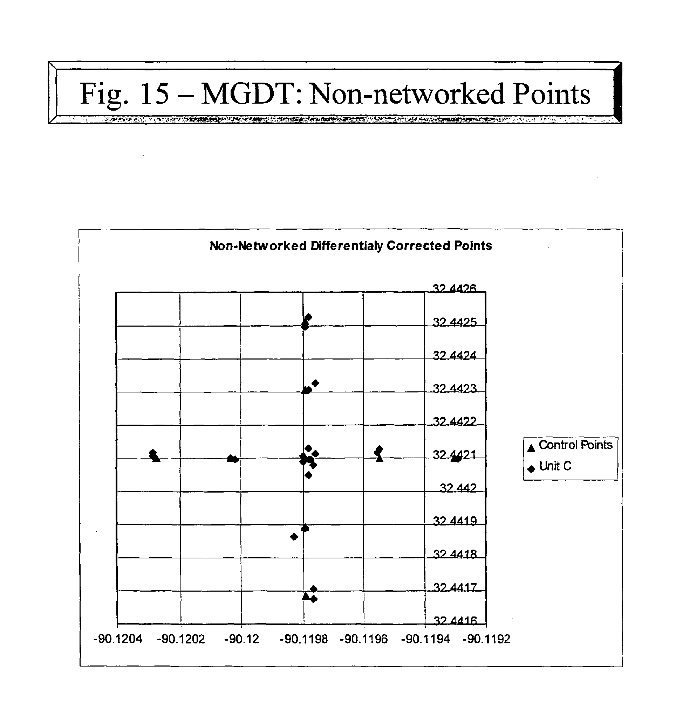

For the eFilter to work properly, the GPS must perform in such a manner that points surveyed within a short time interval have similar offset errors from the actual location. FIG. 13 was produced by the MGDT of one embodiment of the present invention for a series of test points along an XY grid showing the handheld GPS positions recorded over time without any DPGS corrections. This analysis shows that even though the GPS positions are "off', they differ from the correct position by similar amounts and thus retain their relative distances to each other as a networked data set of points. FIG. 14 shows similar results for the same handheld GPS using WAAS to obtain and apply DGPS corrections. This shows that DGPS increases the accuracy as expected, and that this GPS was also programmed properly to produce a networked data set of points. FIG. 15 shows tube results of a GPS that although is in general more accurate than the one shown in FIG. 13, it produces points that are not networked and thus cannot benefit from the use of the eFilter.

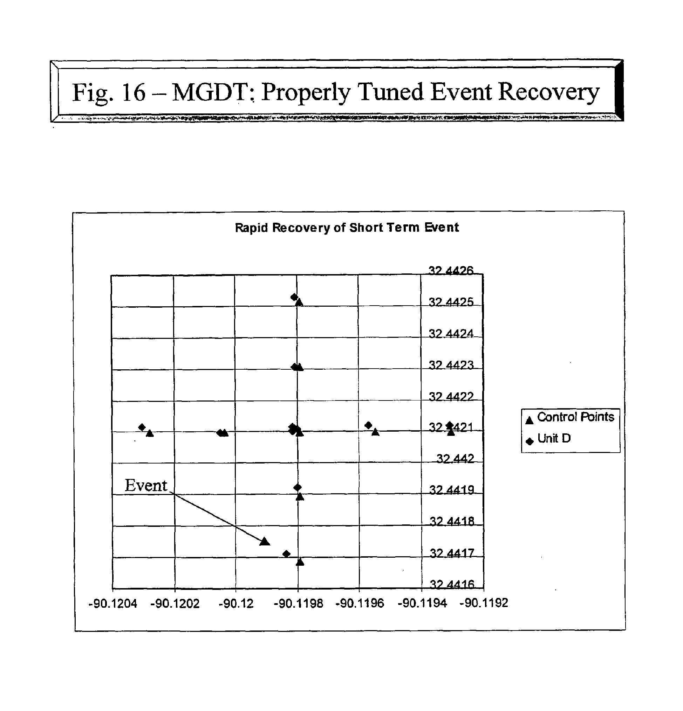

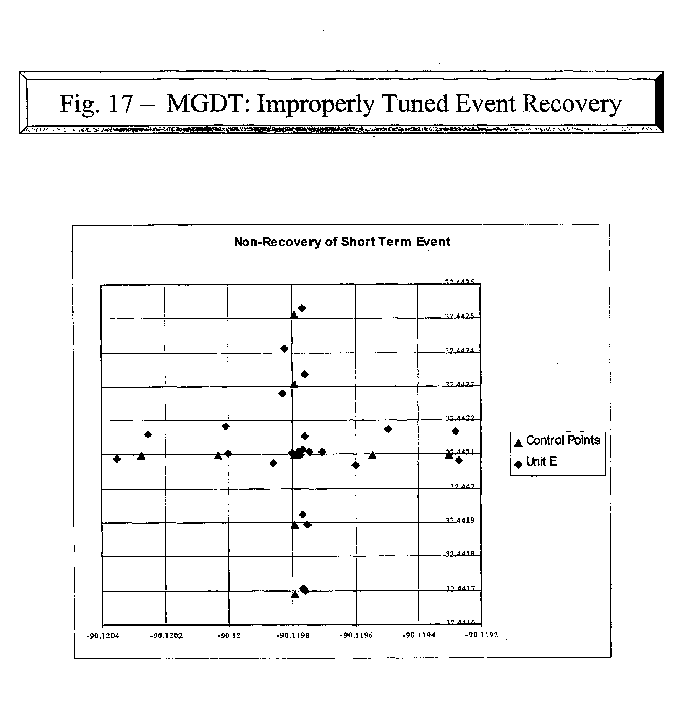

FIG. 16 shows the results of a GPS that experienced a short-term event that momentarily effected the position accuracy of one point, but used properly tuned parameters to quickly recover from the event. FIG. 17 shows the results of a GPS without appropriate tunable parameters that experienced a similar short-term event, but the effect on the position accuracy was propagated over a period of time and over several points in a manner that would significantly affect the golfer's ability to use of the GPS on a golf course.

## Tunable GPS parameters

As illustrated in the previous section, a GPS that does not use tunable GPS parameters configured for the mobile golfer can produce disappointing results. Any GPS unit that is programmable and configurable with the required parameters may be used to improve performance. These include, but are not limited to, Magellan GPS for Pahn V and Handspring Visor series, GeoMcovery Geode, BAE Systems AllStar, Garmin, Tumble and Rockwell GPS units with RS-232 interface. Several parameters have been identified that need to be tuned to produce optimal results for a specific course. These configurable parameters include position averaging, satellite elevation masking, satellite signal strength masking, carrier phase smoothing and pseudorange filtering. Each of these parameters is known configurable parameters in GPS applications. Carrier phase smoothing pertains to filtering of the actual GPS carrier signal for use as a reference in the GPS calculations internal to the GPS unit. Pseudorange filtering pertains to the smoothing of the individual calculated ranges to the GPS satellites prior to their use in producing a GPS navigation solution as output from the GPS unit. The software module that controls the GPS configuration parameters is referred to herein as a "Smart Filter" or an "sFiltee'. The sFilter's function is to dynamically allow the individual mobile golfer to set or monitor the parameters used to average out the effects of multipath and other GPS signal errors. The ability of one embodiment of the present invention to be able to group a set of parameters that have been fine tuned to optimize the accuracy of the GPS for a specific course or individual golfer enables the system to perform optimally given the general environmental conditions of a specific course. For example, a GPS on a course in the desert may operate best with low satellite elevation masking and a large carrier phase smoothing filter. However if these same settings were used on a course in a valley or one with large buildings nearby, the golfer could experience less than optimal results, whereas in this case, an sFilter setting with a higher satellite elevation mask and a smaller carrier phase smoothing filter would work better. The preferred embodiment of the present invention allows the golfer to set the configurable parameters on his own or to download an optimized set of configurable parameters for a particular course from an outside source. In addition, an optimized set of configurable parameters could be automatically determined by the PDA using a MGDT, such as that described above.

These tunable parameters can be revised over time for a specific course as more golfers use the system and learn the best values for that course. These values can be published so that the golfer can set the tunable GPS parameters before starting play on a course. The tunable GPS parameters could also be electronically provided to the golfer through various techniques described in the next section to further automate this process.

## Data Exchange

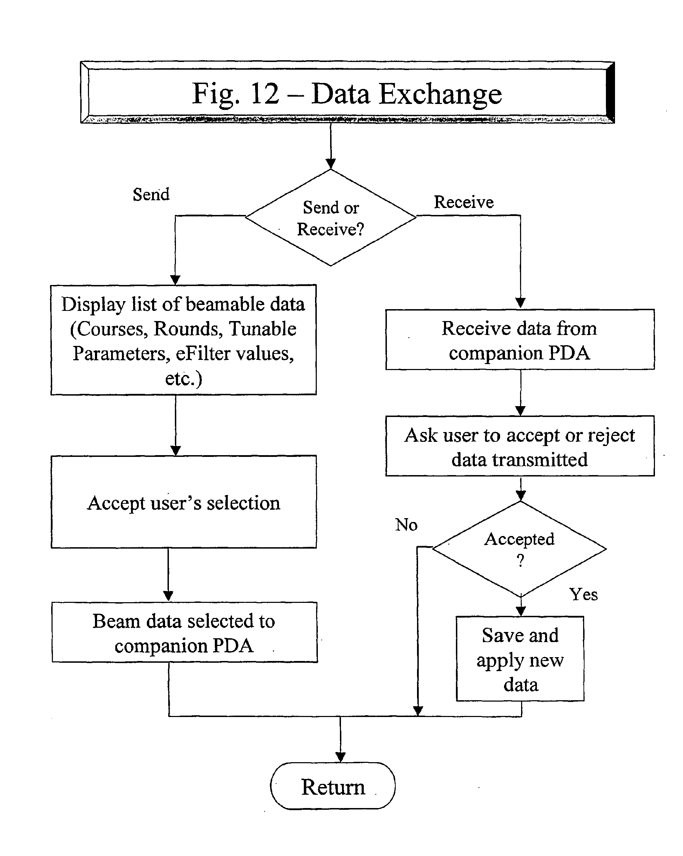

Basic course position data and GPS tunable parameters may be beamed or transmitted to other nearby golfers. Also, the results of any of the actions previously described can be beamed via a PDA infrared port or transmitted wirelessly to other nearby golfers to enable them to use the results of those actions without having to perform those actions themselvcs. In particular, this allows one person in a group, or a caddie, to be the designated person that periodically goes to specific reference points I and creates new eFilters for the current environmental conditions. The new eFilters can then be transmitted in real time while playing the course to the other members in the group to enable them to more accurately determine distances to a pre-defined survey of known target points on a course. Unlike DGPS type corrections that apply just to your current position, these adjustments are applied to all target Lat/Lon values within a networked data set thereby retaining their distance relationships between targets within the networked data set. It also allows a person to go in advance of the group to mark new targets that may not exist in the pre-defmed course survey and beam or transmit the new targets to the other members in the group so they can have immediate access to computed distances to the new targets adjusted for current environmental conditions in real time while they are playing the course. The beaming flowchart process is shown in FIG. 12.

In order to further enhance the accuracy of this system, the Lat/Lon adjustments for a specific area (including modeling as well as current environmental analysis) can be periodically transmitted to the handheld GPS device via satellite, wireless internet, infrared beaming or other communications for the ,current date and time. Again, unlike DGPS type corrections that apply just to your current position, these adjustments are applied to all target Lat/Lon values within a networked data set thereby retaining their distance relationships between targets within the networked data set.

In order to further enhance the usability of this system this invention would allow the user to upload the target/ avoidance objects and points data that the user has surveyed to a central processing computer via a PC and/or landline and/or wireless link. The central processing computer would apply certain quality control checks to the data and then make it available for download back to the users PDA via the above channels. The tunable GPS parameters specific to this course can also be inserted into the course database to enable other golfers who use this course data to automatically update their GPS with the tunable parameters for this specific course. Once the central processor processed the data, it would be available for other golfers to download by suitable agreement. One embodiment of the present invention uses a website that would provide a means for accomplishing this exchange of data.

### User interface

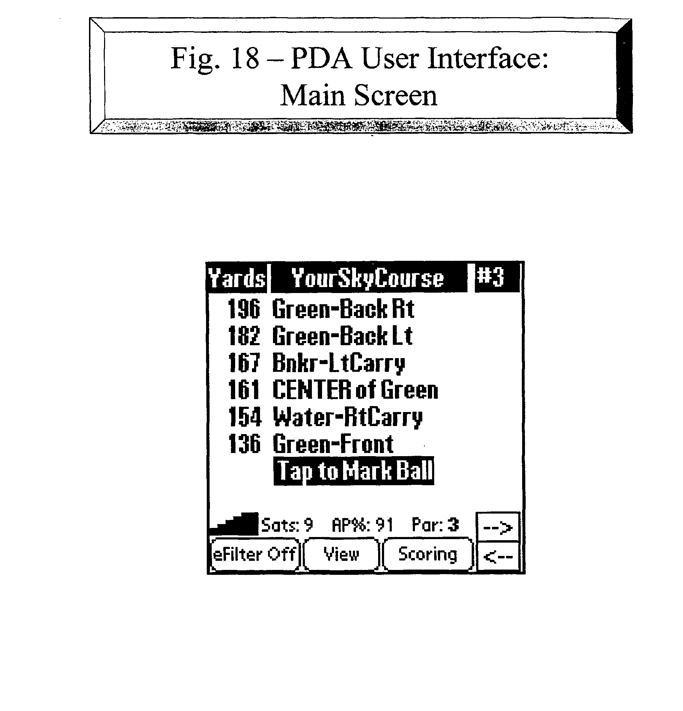

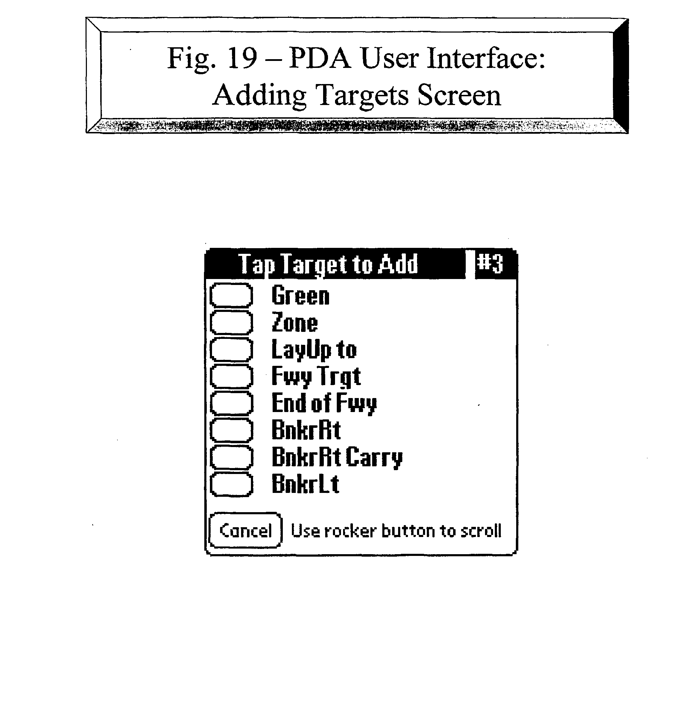

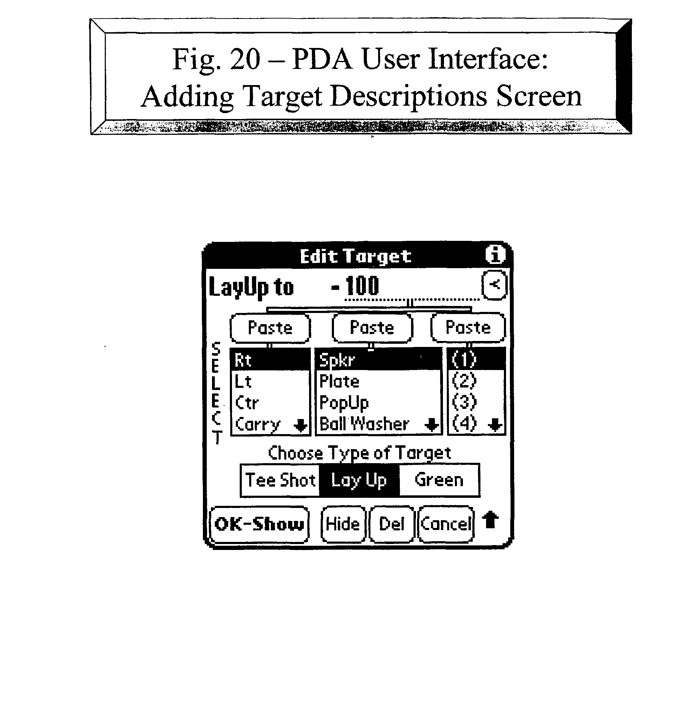

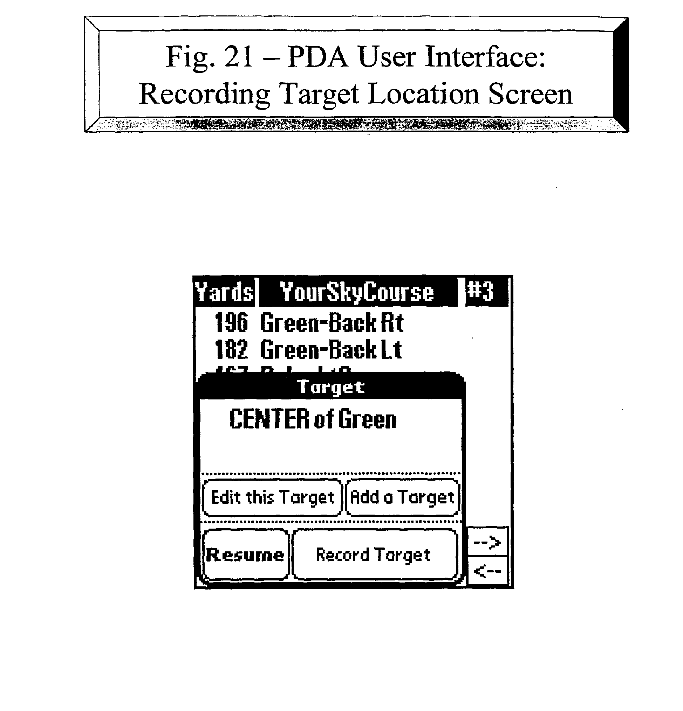

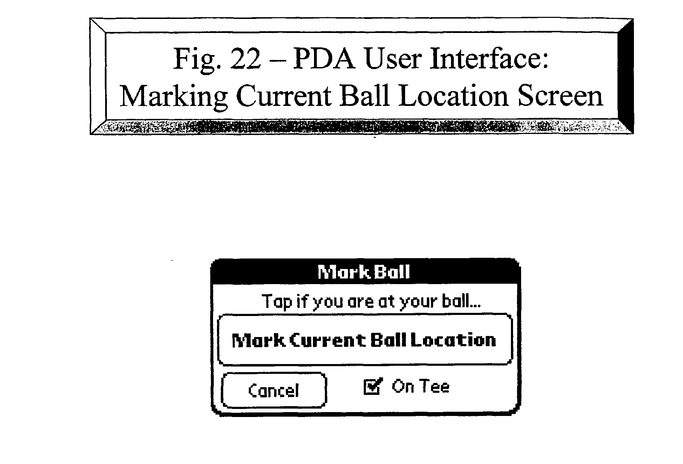

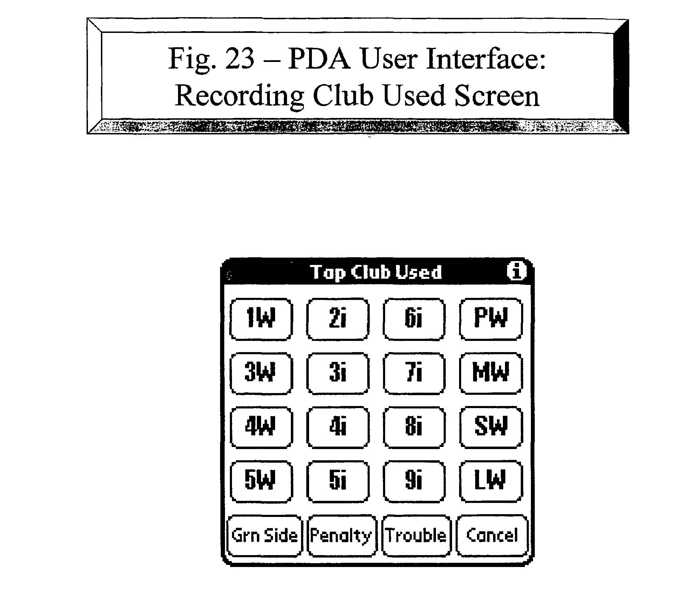

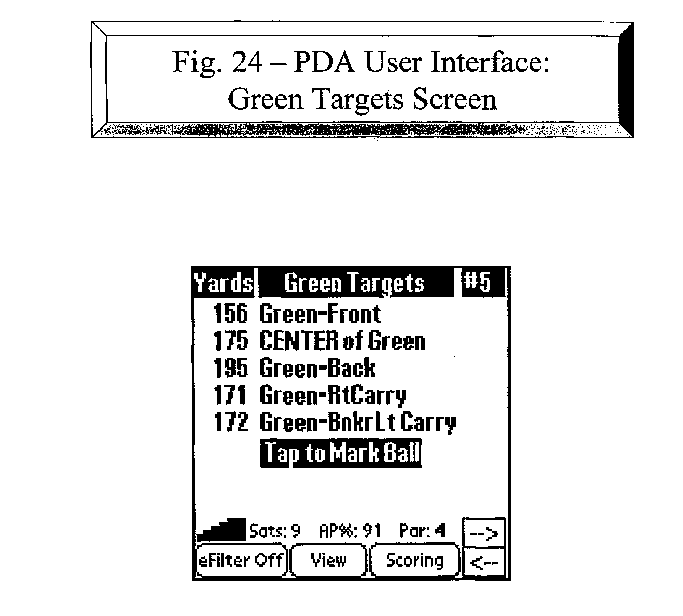

Since the preferred embodiment of the present invention is a target-based system rather than an image-based system, it provides a simplified user interface to quickly determine distances to key targets as shown in FIG. 18. Targets can easily be added beforehand or during play by selecting from a list of common golf targets as shown in FIG. 19 and further describing the targets with additional text or by selecting from lists of common golf descriptors as shown in FIG. 20. Recording a target's location is accomplished by standing at the target, tapping on a target that has been added to the list on the screen and then tapping the record target button as shown in FIG. 21. A mark ball button is provided at the end of the target list to allow the golfer to stand over the ball and tap the button to record the current location of the ball as shown in FIG. 22 and select the club used from a list of clubs tailored to what is currently in the golfer's bag as shown in FIG. 23. Targets are categorized to limit the list to targets of interest (e.g. Green targets) as shown in FIG. 24. This simplified user interface makes it practical for golfers to be able to easily setup and survey their own courses without depending upon any additional equipment or expertise.

### Summary

Preferred embodiments of the present invention provide a compact, simplified and user friendly device and process to capture real world geo-location data that is of interest to a user, analyze that data and present it to a golfer in a useful and beneficial manner.

While the above description contains many specifics, these should not be construed as limitations on the scope of the invention, but rather as an example of one or more embodiments thereof. Many other variations of this invention are possible. Accordingly, the scope of the invention should be determiner not by the embodiments illustrated, but by the appended claims.

### Claims

1. A golfing assistant apparatus for measuring and displaying distances between a golfer and a desired location on a golf course comprising:

   a handheld computing device;
   a GPS device connected to said handheld computing device, wherein said handheld computing device and said GPS device are contained within a single handheld housing;
   said GPS device producing measured location information based on Environmental conditions corresponding to the location of said GPS device;
means for modifying said measured location information to obtain corrected location information, said means comprising means for tuning configurable OPS parameters to form at least one configured GPS parameter, wherein said GPS device uses the at least one configured GPS parameter to produce the connected location information,
means for transmitting said at least one configured GPS parameters
means for determining a distance between the GPS device and a desired location by using said corrected location information and stored information concerning the location of said desired location; and
wherein said handheld computing device displays said distance.

2. The apparatus of claim 1, wherein said computing device and, said GPS device are in a single handheld housing.

3. The apparatus of claim 1 or claim 2, wherein said desired location is selected from one or more of: the location of a green; the location of a sandtrap; and the location of water hazard.

4. The apparatus of claim 1, claim 2 or claim 3; wherein said GPS device uses said at least one configured GPS parameter to produce one or more of: latitude and longitude; and altitude values.

5. The apparatus of any preceding claim wherein said configurable GPS parameters includes position averaging, satellite elevation masking, satellite signal strength masking, carrier phase smoothing and pseudorange filtering.

6. The apparatus of any preceding claim wherein the means for tuning said at least one configured GPS parameter of the GPS device is fine tuned specifically for one or more of: said general environmental conditions where said golf course is located; and specifically for said golf course.

7. The apparatus of any preceding claim wherein said means for transmitting said at least one configured GPS parameter comprises transmitting said at least one configured GPS parameter to one or more of: a nearby golfer; a central processing computer; a golf course database; and a website.

8. The apparatus of any preceding claim further comprising means for downloading an optimized set of configurable parameters.

9. A golfing assistant apparatus for measuring and displaying distances between a golfer and a desired location on a golf course comprising
a handheld computing device;
a OPS device connected to said handheld computing device wherein said handheld computing and said GPS are contained within a single handheld housing
said GPS device producing measured location information based on environmental conditions corresponding to the location of said GPS device;
means for modifying said measured location information to obtain corrected location information, said means comprising means, for downloading at least one configurable GPS parameter for said GPS device; wherein said GPS device uses the at least one configured GPS parameter to produce the connected locations information,
means for A a distance between the GPS device and desired location by using said corrected location information and stored information concerning the location of said desired location; and
wherein said handheld computing device displays said distance.

10. The apparatus of claim 9 wherein said computing device and said GPS device are in a single handheld housing.

11. The apparatus of claim 9. or claim 10 wherein said desired location is selected from one or more of: the location of a green; the location of a sandtrap; and the location of water hazard.

12. The apparatus of any of claim 9, claim 10 or claim 11 wherein said GPS device uses said at least one configured OPS parameter to produce one or more of: the latitude and longitude; and altitude values.

13. The apparatus of any of claims 9-13 wherein said configurable GPS parameters of said GPS device includes position averaging, satellite elevation masking, satellite signal strength masking, carrier phase smoothing and pseudorange filtering.

14. The apparatus of any of claims 9-13 wherein said at least one configured GPS parameter is fine tuned specifically for one or more of said general environmental conditions where said golf course is located; and specifically for said golf course

15. The apparatus of any of claims 9-14 wherein said means for downloading said at least one configured GPS parameter comprises downloading said at least one configured GPS parameter from one or more of: a nearby golfer; a central processing computer; a golf course database; and a website.

16. The apparatus or any of claims 9-15 further comprising means for transmitting an optimized set of configurable GPS parameters.

17. A method of obtaining and processing location values for a desired point on a golf course comprising the steps of:

tuning at least one configurable GPS parameter for a GPS device to form at least one configured GPS parameter; transmitting at least one configurable GPS parameter
obtaining reference point GPS information using a handheld GPS device reflecting a measured location of a reference point;
comparing said GPS information with true location information for said reference point using a handheld computing device and generating one or more correction values based on environmental conditions;
obtaining desired point GPS information using a handheld GPS device reflecting a measured location of said desired point, wherein said GPS device uses the at least one configured GPS parameter to produce a connected location information; and
applying said one or more correction values to said desired point GPS information using a handheld computing device to generate corrected location information for said desired point, wherein said handheld computing device and said handheld GPS device
are contained whitin a single handheld housing.

18. The method of claim 17 wherein said corrected location information is used to calculate the distance between said desired point and a stored target point.

19. The method of claim 17 or claim 18, further comprising the steps of:

storing location values for multiple targets on a golf course based on GPS measurements taken on a first date; generating corrected location values based on a difference in environmental conditions on said first date and a second date;
on said second date, obtaining location information concerning a desired point using a GPS device; and computing the distance between said desired point and one of said multiple targets using said corrected location values and said location information concerning said desired point.

20. The method of claim 17, claim 18 or claim 19, wherein said configurable GPS parameters for a GPS device includes position averaging, satellite elevation masking, satellite signal strength masking, carrier phase smoothing and pseudorange filtering.

21. The method of any of claims 17-20, wherein said tuning configurable GPS parameters for a GPS device comprises downloading an optimized set of configurable parameters.

22. The method of any of claims 17-21 wherein said at least one configured GPS parameter is fine-tuned specifically for one or more of said general environmental conditions where said golf course is located; and specifically for said golf course.

23. The method of any of claims 17-22 further comprising transmitting said at least one configured GPS parameter to one or more of: a nearby golfer; a central processing computer, a golf course course database; and a website.

**Patentansprüche**

1. Golfspiel-Assistenzvorrichtung bzw. Golfassistenteneinrichtung zum Messen und Anzeigen von Abständen zwischen einem Golfspieler und einem gewünschten Ort auf einem Golfplatz, die enthält:

eine tragbare Rechenvorrichtung;

eine GPS-Vorrichtung, die mit der tragbaren Rechenvorrichtung verbunden ist, wobei die tragbare Rechenvorrichtung und die GPS-Vorrichtung in einem einzigen tragbaren Gehäuse enthalten sind;

wobei die GPS-Vorrichtung gemessene Ortsinformationen anhand von Umgebungsbedingungen, die dem Ort der GPS-Vorrichtung entsprechen, erzeugt;

Mittel zum Modifizieren der gemessenen Ortsinformationen, um korrigierte Ortsinformationen zu erhalten, wobei die Mittel Mittel zum Abstimmen konfigurierbarer GPS-Parameter enthalten, um wenigstens einen konfigurierten GPS-Parameter zu bilden, wobei die GPS-Vorrichtung den wenigstens einen konfigurierten GPS-Parameter verwendet, um die korrigierten Ortsinformationen zu erzeugen;

Mittel, um den wenigstens einen konfigurierten GPS-Parameter zu senden;

Mittel zum Bestimmen eines Abstands zwischen der GPS-Vorrichtung und einem gewünschten Ort unter Verwendung der korrigierten Ortsinformationen und von gespeicherten Informationen bezüglich des Orts des gewünschten Orts; und

wobei die tragbare Rechenvorrichtung den Abstand anzeigt.

2. Vorrichtung nach Anspruch 1, wobei die Rechenvorrichtung und die GPS-Vorrichtung in einem einzigen tragbaren Gehäuse vorhanden sind.

3. Vorrichtung nach Anspruch 1 oder Anspruch 2, wobei der gewünschte Ort aus einem oder mehreren der Folgenden ausgewählt wird: dem Ort eines Greens, dem Ort eines Sandlochs; und dem Ort eines Wasserhindernisses.

4. Vorrichtung nach Anspruch 1, Anspruch 2 oder Anspruch 3, wobei die GPS-Vorrichtung den wenigstens einen konfigurierten GPS-Parameter verwendet, um einen oder mehrere der folgenden Werte zu erzeugen: geographische Breite und Länge; und Höhenwerte.

5. Vorrichtung nach einem vorhergehenden Anspruch, wobei die konfigurierbaren GPS-Parameter eine Positionsmittelung, eine Satellitenelevations-Maskierung, eine Satellitensignalstärken-Maskierung, eine Trägerphasenglättung und eine Pseudobereichsfilterung enthalten.

6. Vorrichtung nach einem vorhergehenden Anspruch, wobei die Mittel zum Abstimmen des wenigstens einen konfigurierten GPS-Parameters der GPS-Vorrichtung spezifisch für die allgemeinen Umgebungsbedingungen, wo sich der Golfplatz befindet, und/oder spezifisch für den Golfplatz fein abgestimmt sind.

7. Vorrichtung nach einem vorhergehenden Anspruch, wobei die Mittel zum Senden des wenigstens einen konfigurierten GPS-Parameters das Senden des wenigstens einen konfigurierten GPS-Parameters zu einem nahen Golfspieler und/oder zu einen Zentralverarbeitungscomputer und/oder zu einer Golfplatz-Datenbank und/oder zu einer Website enthält.

8. Vorrichtung nach einem vorhergehenden Anspruch, die ferner Mittel zum Herunterladen einer optimierten Menge konfigurierbarer Parameter enthält.

9. Golfspiel-Assistenzvorrichtung bzw. Golfassistenteneinrichtung zum Messen und Anzeigen von Abständen zwischen einem Golfspieler und einem gewünschten Ort auf einem Golfplatz, die enthält:

eine tragbare Rechenvorrichtung;

eine GPS-Vorrichtung, die mit der tragbaren Rechenvorrichtung verbunden ist, wobei die tragbare Rechenvorrichtung und die GPS-Vorrichtung in einem einzigen tragbaren Gehäuse enthalten sind;

wobei die GPS-Vorrichtung gemessene Ortsinformationen anhand von Umgebungsbedingungen, die dem Ort der GPS-Vorrichtung entsprechen, erzeugt;

Mittel zum Modifizieren der gemessenen Ortsinformationen, um korrigierte Ortsinformationen zu erhalten, wobei die Mittel Mittel zum Herunterladen wenigstens eines konfigurierbaren GPS-Parameters für die GPS-Vorrichtung enthalten, wobei die GPS-Vorrichtung den wenigstens einen konfigurierten GPS-Parameter verwendet, um die korrigierten Ortsinformationen zu erzeugen;

Mittel zum Bestimmen eines Abstands zwischen der GPS-Vorrichtung und einem gewünschten Ort unter Verwendung der korrigierten Ortsinformationen und von gespeicherten Informationen, die den Ort des gewünschten Orts betreffen; und

wobei die tragbare Rechenvorrichtung den Abstand anzeigt.

10. Vorrichtung nach Anspruch 9, wobei die Rechenvorrichtung und die GPS-Vorrichtung in einem einzigen tragbaren Gehäuse vorhanden sind.

11. Vorrichtung nach Anspruch 9 oder Anspruch 10, wobei der gewünschte Ort aus einem oder mehreren der Folgenden gewählt ist: dem Ort eines Greens; dem Ort eines Sandlochs; und dem Ort eines Wasserhindernisses.

12. Vorrichtung nach Anspruch 9, Anspruch 10 oder Anspruch 11, wobei die GPS-Vorrichtung den wenigstens einen konfigurierten GPS-Parameter verwendet, um eines oder mehrere der Folgenden zu erzeugen: die geographische Breite und Länge; und Höhenwerte.

13. Vorrichtung nach einem der Ansprüche 9-13, wobei die konfigurierbaren GPS-Parameter der GPS-Vorrichtung eine Positionsmittelung, eine Satellitenevelations-Maskierung, eine Satellitensignalstärke-Maskierung, eine Trägerphasenglättung und eine Pseudobereichsfilterung enthalten.

14. Vorrichtung nach einem der Ansprüche 9-13, wobei der wenigstens eine konfigurierte GPS-Parameter spezifisch für die allgemeinen Umgebungsbedingungen, wo sich der Golfplatz befindet, und/oder spezifisch für den Golfplatz fein abgestimmt ist.

15. Vorrichtung nach einem der Ansprüche 9-14, wobei die Mittel zum Herunterladen des wenigstens einen konfigurierten GPS-Parameters das Herunterladen des wenigstens einen konfigurierten GPS-Parameters von einem nahen Golfspieler, und/oder von einem Zentralverarbeitungscomputer, und/oder von einer Golfplatz-Datenbank, und/oder von einer Website enthält.

16. Vorrichtung nach einem der Ansprüche 9-15, die ferner Mittel zum Senden einer optimierten Menge konfigurierbarer GPS-Parameter enthält.

17. Verfahren zum Erhalten und Verarbeiten von Ortswerten für einen gewünschten Punkt auf einem Golfplatz, das die folgenden Schritte umfasst:

Abstimmen wenigstens eines konfigurierbaren GPS-Parameters für eine GPS-Vorrichtung, um wenigstens einen konfigurierten GPS-Parameter zu bilden;
Senden wenigstens eines konfigurierbaren GPS-Parameters;
Erhalten von Referenzpunkt-GPS-Informationen unter Verwendung einer tragbaren GPS-Vorrichtung, die einen gemessenen Ort eines Referenzpunkts wiedergibt;
Vergleichen der GPS-Informationen mit wahren Ortsinformationen für den Referenzpunkt unter Verwendung einer tragbaren Rechenvorrichtung und Erzeugen eines oder mehrerer Korrekturwerte anhand von Umgebungsbedingungen;
Erhalten von GPS-Informationen über einen gewünschten Punkt unter Verwendung einer tragbaren GPS-Vorrichtung, die einen gemessenen Ort des gewünschten Punkts wiedergibt, wobei die GPS-Vorrichtung den wenigstens einen konfigurierten GPS-Parameter verwendet, um korrigierte Ortsinformationen zu erzeugen; und
Anwenden des einen oder der mehreren Korrekturwerte auf die GPS-Informationen für den gewünschten Punkt unter Verwendung einer tragbaren Rechenvorrichtung, um korrigierte Ortsinformationen für den gewünschten Punkt zu erzeugen, wobei die tragbare Rechenvorrichtung und die tragbare GPS-Vorrichtung in einem einzigen tragbaren Gehäuse enthalten sind.

18. Verfahren nach Anspruch 17, wobei die korrigierten Ortsinformationen verwendet werden, um den Abstand zwischen dem gewünschten Punkt und einem gespeicherten Zielpunkt zu berechnen.

19. Verfahren nach Anspruch 17 oder Anspruch 18, das ferner die folgenden Schritte umfasst:

Speichern von Ortswerten für mehrere Ziele auf einem Golfplatz anhand von GPS-Messungen, die zu einem ersten Datum vorgenommen worden sind;
Erzeugen korrigierter Ortswerte anhand einer Differenz von Umgebungsbedingungen zu dem ersten Datum und einem zweiten Datum;
zu dem zweiten Datum Erhalten von Ortsinformationen bezüglich eines gewünschten Punkts unter Verwendung einer GPS-Vorrichtung; und
Berechnen des Abstands zwischen dem gewünschten Punkt und einem der mehreren Ziele unter Verwendung von korrigierten Ortsinformationen und der Ortsinformationen, die den gewünschten Punkt betreffen.

20. Verfahren nach Anspruch 17, Anspruch 18 oder Anspruch 19, wobei die konfigurierbaren GPS-Parameter für die GPS-Vorrichtung eine Positionsmittelung, eine Satellitenelevations-Maskierung, eine Satellitensignalstärken-Maskierung, eine Trägerphasenglättung und eine Pseudobereichsfilterung enthalten.

21. Verfahren nach einem der Ansprüche 17-20, wobei das Abstimmen von konfigurierbaren GPS-Parametern für eine GPS-Vorrichtung das Herunterladen einer optimierten Menge konfigurierbarer Parameter umfasst.

22. Verfahren nach einem der Ansprüche 17-21, wobei der wenigstens eine konfigurierte GPS-Parameter spezifisch für die allgemeinen Umgebungsbedingungen, wo sich der Golfplatz befindet, und/oder spezifisch für den Golfplatz fein abgestimmt wird.

23. Verfahren nach einem der Ansprüche 17-22, das ferner das Senden des wenigstens einen konfigurierten GPS-Parameters zu einem nahen Golfspieler, und/oder zu einem Zentralverarbeitungscomputer, und/oder zu einer Golfplatz-Datenbank, und/oder zu einer Website umfasst.

**Revendications**

1. Dispositif de positionnement aidant à la pratique du golf pour mesurer et afficher des distances entre un golfeur et une position voulue sur un parcours de golf comportant :

   un dispositif informatique portable ;
   un dispositif GPS relié audit dispositif informatique portable, dans lequel ledit dispositif informatique portable et ledit dispositif GPS sont contenus dans un boîtier portable unique ;
   ledit dispositif GPS produisant des informations de position mesurée sur la base de conditions environnementales correspondant à la position dudit dispositif GPS ;
   des moyens pour modifier lesdites informations de position mesurée afin d'obtenir des informations de position corrigée, lesdits moyens comportant des moyens pour accorder des paramètres GPS configurables afin de former au moins un paramètre GPS configuré, dans lequel ledit dispositif GPS utilise le au moins un paramètre GPS configuré pour produire les informations de position corrigée ;
   des moyens pour transmettre ledit au moins un paramètre GPS configuré ;
   des moyens pour déterminer une distance entre le dispositif GPS et une position voulue en utilisant lesdites informations de position corrigée et des informations mémorisées concernant la position de ladite position voulue ; et
   dans lequel ledit dispositif informatique portable affiche ladite distance.

2. Dispositif selon la revendication 1, dans lequel ledit dispositif informatique et ledit dispositif GPS sont contenus dans un boîtier portable unique.

3. Dispositif selon la revendication 1 ou la revendication 2, dans lequel ladite position voulue est sélectionnée à partir d'une ou plusieurs positions parmi : la position d'un green ; la position d'une fosse de sable et la position d'un obstacle d'eau.

4. Dispositif selon la revendication 1, la revendication 2 ou la revendication 3, dans lequel ledit dispositif GPS utilise ledit au moins un paramètre GPS configuré pour produire une ou plusieurs valeurs parmi : la latitude et la longitude ; et des valeurs d'altitude.

5. Dispositif selon l'une quelconque des revendications précédentes, dans lequel lesdits paramètres GPS configurables incluent une mise en moyenne de positions, un masquage d'élévation par satellite, un masquage d'intensité de signal par satellite, un lissage de phase de porteuse et un filtrage pseudodistance.

6. Dispositif selon l'une quelconque des revendications précédentes, dans lequel les moyens pour accorder ledit au moins un paramètre GPS configuré du dispositif GPS sont accordés de manière minutieuse spécifiquement pour une ou plusieurs parmi lesdites conditions environnementales générales où ledit parcours de golf est situé ; et spécifiquement pour ledit parcours de golf.

7. Dispositif selon l'une quelconque des revendications précédentes, dans lequel lesdits moyens pour transmettre ledit au moins un paramètre GPS configuré comportent la transmission dudit au moins un paramètre GPS configuré à un ou plusieurs parmi : un golfeur à proximité ; un ordinateur de traitement central ; une base de données de parcours de golf ; et un site de la toile mondiale.

8. Dispositif selon l'une quelconque des revendications précédentes comportant en outre des moyens pour télécharger un ensemble optimisé de paramètres configurables.

9. Dispositif de positionnement aidant à la pratique du golf pour mesurer et afficher des distances entre un golfeur et une position voulue sur un parcours de golf comportant :

un dispositif informatique portable ;
un dispositif GPS relié audit dispositif informatique portable, dans lequel ledit dispositif informatique portable et ledit dispositif GPS sont contenus dans un boîtier portable unique ;
ledit dispositif GPS produisant des informations de position mesurée sur la base de conditions environnementales correspondant à la position dudit dispositif GPS ;
des moyens pour modifier lesdites informations de position mesurée afin d'obtenir des informations de position corrigée, lesdits moyens comportant des moyens pour télécharger au moins un paramètre GPS configurable pour ledit dispositif GPS, dans lequel ledit dispositif GPS utilise le au moins un paramètre GPS configuré pour produire la position corrigée ;
des moyens pour déterminer une distance entre le dispositif GPS et une position voulue en utilisant lesdites informations de position corrigée et des informations mémorisées concernant la position de ladite position voulue ; et
dans lequel ledit dispositif informatique portable affiche ladite distance.

10. Dispositif selon la revendication 9, dans lequel ledit dispositif informatique et ledit dispositif GPS sont contenus dans une boîtier portable unique.

11. Dispositif selon la revendication 9 ou la revendication 10, dans lequel ladite position voulue est sélectionnée à partir d'une ou plusieurs positions parmi : la position d'un green ; la position d'une fosse de sable et la position d'un obstacle d'eau.

12. Dispositif selon l'une quelconque de la revendication 9, de la revendication 10 ou de la revendication 11 dans lequel ledit dispositif GPS utilise ledit au moins un paramètre GPS configuré pour produire une ou plusieurs valeurs parmi : la latitude et la longitude ; et des valeurs d'altitude.

13. Dispositif selon l'une quelconque des revendications 9 à 13, dans lequel lesdits paramètres GPS configurables dudit dispositif GPS incluent une mise en moyenne de positions, un masquage d'élévation par satellite, un masquage d'intensité de signal par satellite, un lissage de phase de porteuse et un filtrage pseudodistance.

14. Dispositif selon l'une quelconque des revendications 9 à 13, dans lequel ledit au moins un paramètre GPS configuré est accordé de manière minutieuse spécifiquement pour une ou plusieurs desdites conditions environnementales générales où ledit parcours de golf est situé ; et spécifiquement pour ledit parcours de golf.

15. Dispositif selon l'une quelconque des revendications 9 à 14, dans lequel lesdits moyens pour télécharger ledit au moins un paramètre GPS configuré comportent le téléchargement dudit au moins un paramètre GPS configuré à partir d'un ou plusieurs parmi : un golfeur à proximité ; un ordinateur de traitement central ; une base de données de parcours de golf ; et un site de la toile mondiale.

16. Dispositif selon l'une quelconque des revendications 9 à 15, comportant en outre des moyens pour transmettre un ensemble optimisé de paramètres GPS configurables.

17. Procédé pour obtenir et traiter des valeurs de position pour un point voulu sur un parcours de golf comportant les étapes consistant à :

accorder au moins un paramètre GPS configurable pour un dispositif GPS afin de former au moins un paramètre GPS configuré ;
transmettre au moins un paramètre GPS configurable ;
obtenir des informations GPS de point de référence en utilisant un dispositif GPS portable renvoyant une position mesurée d'un point de référence ;

comparer lesdites informations GPS à des informations de position réelle pour ledit point de référence en utilisant un dispositif informatique portable et générer une ou plusieurs valeurs de correction sur la base de conditions environnementales ;

obtenir des informations GPS de point voulu en utilisant un dispositif GPS portable renvoyant une position mesurée dudit point voulu, dans lequel ledit dispositif GPS utilise le au moins un paramètre GPS configuré pour produire une information de position corrigée ; et

appliquer ladite ou lesdites valeurs de correction auxdites informations GPS de point voulu en utilisant un dispositif

informatique portable pour générer des informations de position corrigée pour ledit point voulu, dans lequel ledit dispositif informatique portable et ledit dispositif GPS portable sont contenus dans un boîtier portable unique.

18. Procédé selon la revendication 17, dans lequel lesdites informations de position corrigée sont utilisées pour calculer la distance entre ledit point voulu et un point cible mémorisé.

19. Procédé selon la revendication 17 ou la revendication 18, comportant en outre les étapes consistant à :

mémoriser des valeurs de position pour de multiple cibles sur un parcours de golf sur la base de mesures GPS prises à une première date ;

générer des valeurs de position corrigée sur la base d'une différence de conditions environnementales à ladite première date et à une seconde date ;

à ladite seconde date, obtenir des informations de positions concernant un point voulu en utilisant un dispositif GPS, et

calculer la distance entre ledit point voulu et une desdites multiple cibles en utilisant lesdites valeurs de position corrigée et lesdites informations de position concernant ledit point voulu.

20. Procédé selon la revendication 17, la revendication 18 ou la revendication 19, dans lequel lesdits paramètres GPS configurables pour un dispositif GPS incluent une mise en moyenne de positions, un masquage d'élévation par satellite, un masquage d'intensité de signal par satellite, un lissage de phase de porteuse et un filtrage pseudodistance.

21. Procédé selon l'une quelconque des revendications 17 à 20, dans lequel ledit accord des paramètres GPS configurables pour un dispositif GPS comporte le téléchargement d'un ensemble optimisé de paramètres configurables.

22. Procédé selon l'une quelconque des revendications 17 à 21, dans lequel ledit au moins un paramètre GPS configuré est accordé de manière minutieuse spécifiquement pour une ou plusieurs desdites conditions environnementales générales où ledit parcours de golf est localisé ; et spécifiquement pour ledit parcours de golf.

23. Procédé selon l'une quelconque des revendications 17 à 22 comportant en outre la transmission dudit au moins un paramètre GPS configuré à un ou plusieurs parmi : un golfeur à proximité ; un ordinateur de traitement central ; une base de données de parcours de golf ; et un site de la toile mondiale.

## Fig. 1 - Digital Personal Golf Assistant Main Program

Display Title Screen &
Verify Registration

Current Round
Current Target

Initialize Data & GPS
Load Current Round
Load Current Targets
Initialize Yds/Lat&Lon

Display Target Distance
Screen
Set state=update

User
Input?

Yes → Process
User Input

No

Process
State Action

## Fig. 2 - Process User Input

```
                    Yes
Menu Event?  ─────────────▶  Process
                             Menu Event
    │ No
    ▼
                    Yes
Pen Down     ─────────────▶  Process
Event?                       Pen Down
                             Event
    │ No
    ▼
                    Yes
Virtual      ─────────────▶  Process
Button                       Virtual Button
Event?                       Event
    │ No
    ▼
                    Yes
Hard         ─────────────▶  Process
Button                       Hard Button
Event?                       Event
    │ No
    ▼
 Return
```

# Fig. 3 - Process Menu Event

```
                    Yes      ┌─────────────────────────┐
                             │          NEW:           │
        ◇ Course? ◇ ─────────│  Reset Current Targets  │
                             │   Reset Current Round   │
                             │ Get Course Data from User│
         No                  │  (Name, Pars, Hcps, etc.)│
                             │         OTHER:          │
                             │ Modify/Save/Load as selected│
                             └─────────────────────────┘

                    Yes      ┌─────────────────────────┐
                             │          NEW:           │
        ◇ Round? ◇ ──────────│   Reset Current Round   │
                             │         OTHER:          │
         No                  │ Modify/Save/Load as selected│
                             └─────────────────────────┘

                    Yes      ┌─────────────────────────┐
                             │      SCORES/STATS:      │
       ◇ Scoring? ◇ ─────────│  Accept scoring/stats info│
                             │   from golfer and save  │
         No          Yes     │         CLUBS:          │
                             │ Accept club info and save│
                             └─────────────────────────┘

                    Yes      ┌─────────────────────────┐
                             │          HELP:          │
                             │ Display Selected Help Info│
        ◇ Help? ◇ ───────────│      DIAGNOSTICS:       │
                             │ Set tunable GPS parameters│
         No                  │ Set/Display diagnostic info│
                             │      PREFERENCES        │
                             │   Set User Preferences  │
                             │      SYSTEM CHECK       │
                             │  Perform System Checks  │
                             └─────────────────────────┘

              ( Return )
```

# Fig. 4 - Process Pen Down Event

State= mupdate?  — No →  State= map?  — No

Yes

**Display Update Target Window for selected Target**

Yes

**Determine Lat/Lon based on where screen is touched**

**RECORD:.**
Set Use Target
Save Lat/Lon/Alt/Hdop/Sats/Qual
for the selected Target

**EDIT:**
Edit Target Information
Show/Hide Target as selected

**ADD:**
Add new Target

**RESUME**
No Action

**Compute Distance to Target and Distance Hit from Lat/Lon of touch point**

**Display Distance to Target and Distance Hit**

( Return )

# Fig. 5 - Process Virtual Button Event

MARK BALL:
Compute distance from last ball location & save distance
Set last ball location = current Lat/Lon

(See COMPUTE Distance )

TARGET:
Display Modify Target Screen
Set state=mupdate

NEXT/PRIOR HOLE:
Increment/Decrement hole number
Display Targets for hole

VIEW:
Popup View Options
Set state based on view selected (update, map, etc.)

CLUB:
Prompt for club used and save

SCORING:
Prompt for hole scores and hole statistics
(Strokes, Putts, Green in Reg, Up & Down, Sand Save, etc.)
Display summary stat screens if selected

UNITS:
Switch to selected units (yards, meters, etc.)

TARGET TYPE:
Switch to list selected target types
(Tee shot targets, lay up targets, green targets, smartmarks, all)

Return

# Fig. 6 - Process Hard Button Event

SCROLL UP/DOWN:
Display Next Screen of Targets

ON/OFF:
Prompt to verify before turning unit off

NEW APPLICATION:
Prompt to verify before quitting program

Return

# Fig. 7 - Process State Action

State= update? — **Yes** → Read GPS to get current Lat/Lon
Compute Distance to current Targets on screen
Display Distances Computed
Update GPS status indicators

**No** ↓

State= mupdate? — **Yes** → Read GPS to get current Lat/Lon

**No** ↓

State= map? — **Yes** → Read GPS to get current Lat/Lon
Compute position on current map on screen
Move cart icon to new position

**No** ↓

State= stats? — **Yes** → Scan saved data and compute Statistics
Display computed statistics

**No** ↓

State= gps — **Yes** → Display real time status of GPS device

**No** ↓

Return

## Fig. 8 - Compute Distance

Lat & Lon valid?

**No**

**Yes**

Compute difference in Lat
from current position to
Target position
delta Lat = LatT + LatE - Lat
Multiply delta Lat by Yds/Lat

Compute difference in Lon
from current position to
Target position
delta Lon = LonT + LonE - Lon
Multiply delta Lon by Yds/Lon

Compute Distance
$D=Sqrt(delta\ Lon^2\ x\ delta\ Lat^2)$

Return

## Fig. 9 - Analyze Conditions

Display list of reference points
(Smartmarks)

Accept user's selection

Compute difference in Lat
and Lon to selected
reference point and save as
eFilter values
LatE=Lat - LatS
LonE=Lon − LonS
AltE = Alt - AltS

Return

# Fig. 10 – Scoring and Stats

Accept User Input

Golfer's Stats | Golfer's Scores | Display Stats

Save Golfer's stats for hole (Green in reg, sand save, etc.)

Save Golfer's scores for hole

Scan saved data, compute selected stats and display results

Return

# Fig. 11 – Tune GPS

Obtain new GPS
Parameters
(from golfer input,
beaming, course data
file, etc.)

Send tunable
parameters to
attached GPS
device

Return

## Fig. 12 – Data Exchange

```
                          Send or
              Send        Receive?        Receive
        ┌──────────────────┘       └──────────────────┐
        ▼                                              ▼
┌─────────────────────┐              ┌─────────────────────────┐
│ Display list of     │              │ Receive data from       │
│ beamable data       │              │ companion PDA           │
│ (Courses, Rounds,   │              └─────────────────────────┘
│ Tunable Parameters, │                          │
│ eFilter values,     │                          ▼
│ etc.)               │              ┌─────────────────────────┐
└─────────────────────┘              │ Ask user to accept or   │
        │                            │ reject data transmitted │
        ▼                            └─────────────────────────┘
┌─────────────────────┐                          │
│ Accept user's       │         No               ▼
│ selection           │              ┌──────────────────┐
└─────────────────────┘              │    Accepted ?    │
        │                            └──────────────────┘
        ▼                                    │      Yes
┌─────────────────────┐              ┌──────────────┐
│ Beam data selected  │              │ Save and     │
│ to companion PDA    │              │ apply new    │
└─────────────────────┘              │ data         │
        │                            └──────────────┘
        └───────────────────┬────────────────┘
                            ▼
                     ┌──────────────┐
                     │    Return    │
                     └──────────────┘
```

Fig. 13 – MGDT: Networked Points without DGPS

**Networked Non-Differential Points**

## Fig. 14 – MGDT: Networked Points using DGPS

Networked Differentially Corrected Points

# Fig. 15 – MGDT: Non-networked Points

Non-Networked Differentialy Corrected Points

# Fig. 16 – MGDT: Properly Tuned Event Recovery

**Rapid Recovery of Short Term Event**

# Fig. 17 – MGDT: Improperly Tuned Event Recovery

**Non-Recovery of Short Term Event**

Fig. 18 – PDA User Interface:
Main Screen

| Yards | YourSkyCourse | #3 |
|-------|---------------|-----|
| 196 | Green-Back Rt | |
| 182 | Green-Back Lt | |
| 167 | Bnkr-LtCarry | |
| 161 | CENTER of Green | |
| 154 | Water-RtCarry | |
| 136 | Green-Front | |

**Tap to Mark Ball**

Sats: 9    AP%: 91    Par: 3    -->

| eFilter Off | View | Scoring | <-- |

## Fig. 19 – PDA User Interface: Adding Targets Screen

**Tap Target to Add** #3

- Green
- Zone
- LayUp to
- Fwy Trgt
- End of Fwy
- BnkrRt
- BnkrRt Carry
- BnkrLt

Cancel | Use rocker button to scroll

Fig. 20 – PDA User Interface:
Adding Target Descriptions Screen

Fig. 21 – PDA User Interface:
Recording Target Location Screen

| Yards | YourSkyCourse | #3 |
|---|---|---|

196 Green-Back Rt
182 Green-Back Lt

**Target**

CENTER of Green

Edit this Target | Add a Target

Resume | Record Target

-->
<--

## Fig. 22 – PDA User Interface: Marking Current Ball Location Screen

**Mark Ball**

Tap if you are at your ball...

Mark Current Ball Location

Cancel   ☑ On Tee

Fig. 23 – PDA User Interface:
Recording Club Used Screen

Fig. 24 – PDA User Interface:
Green Targets Screen

**EP 1 294 454 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5751294 A

- WO 692116 A